(19) Europäisches Patentamt
European Patent Office
Office européen des brevets

(11) **EP 2 023 132 A2**

(12) **EUROPEAN PATENT APPLICATION**

(43) Date of publication:
**11.02.2009 Bulletin 2009/07**

(51) Int Cl.:
***G01N 27/12*** *(2006.01)*

(21) Application number: **08014064.3**

(22) Date of filing: **06.08.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **08.08.2007 JP 2007206674**

(71) Applicant: **Yamaha Hatsudoki Kabushiki Kaisha**
**Iwata-shi, Shizuoka 438-8501 (JP)**

(72) Inventors:
- **Oh-Hori, Noriko**
**2500, Shingai, Iwata-shi**
**Shizuoka 438-8501 (JP)**
- **Suzuki, Toshio**
**2500, Shingai, Iwata-shi**
**Shizuoka 438-8501 (JP)**

(74) Representative: **Grünecker, Kinkeldey, Stockmair & Schwanhäusser**
**Anwaltssozietät**
**Leopoldstrasse 4**
**80802 München (DE)**

# (54) Gas sensor and air-fuel ratio controller

(57) A gas sensor includes a gas detection section (1), a heater (2) whose electrical resistance value changes in accordance with temperature, and a control section (3) arranged to control an operation of the heater and to perform powering of the heater for heating. The control section includes a current supply section (6) to supply a current to the heater in a period during which powering of the heater for heating is stopped, a voltage detection section (7) arranged to detect an end-to-end voltage of the heater while a current is being supplied to the heater from the current supply section (6), and a current adjustment section (8) arranged to adjust the level of the current, during a cold period of the heater, which is supplied from the current supply section (6) based on an ambient temperature and the end-to-end voltage of the heater as detected by the voltage detection section (7).

*FIG.1*

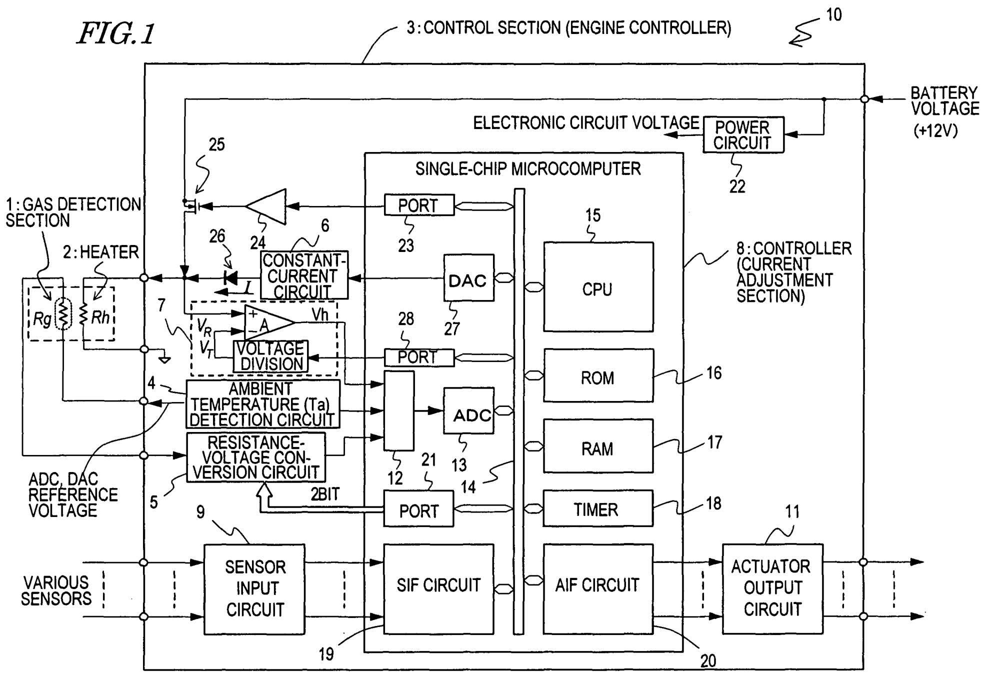


EP 2 023 132 A2

## Description

BACKGROUND OF THE INVENTION

1. Field of the Invention

The present invention relates to a gas sensor, and in particular to a gas sensor having a heater arranged to elevate the temperature of a gas detection section. The present invention also relates to an air-fuel ratio controller and a transportation apparatus incorporating such a gas sensor.

2. Description of the Related Art

From the standpoint of environmental and energy issues, it has been desired to improve the fuel consumption of internal combustion engines, and reduce the emission amount of regulated substances (e.g., $NO_x$) that are contained within exhaust gas from internal combustion engines. In order to meet these needs, it is necessary to appropriately control the ratio between fuel and air in accordance with the state of combustion, so that fuel combustion will occur always under optimum conditions. The ratio of air to fuel is called an "air-fuel ratio" (A/F). In the case where a ternary catalyst is employed, the optimum air-fuel ratio would be the stoichiometric air-fuel ratio. The "stoichiometric air-fuel ratio" is an air-fuel ratio at which air and fuel will just sufficiently combust.

When fuel is combusting at the stoichiometric air-fuel ratio, a certain amount of oxygen is contained within the exhaust gas. When the air-fuel ratio is smaller than the stoichiometric air-fuel ratio (i.e., the fuel concentration is relatively high), the oxygen amount in the exhaust gas decreases relative to that under the stoichiometric air-fuel ratio. On the other hand, when the air-fuel ratio is greater than the stoichiometric air-fuel ratio (i.e., the fuel concentration is relatively low), the oxygen amount in the exhaust gas increases. Therefore, by measuring the oxygen amount or oxygen concentration in the exhaust gas, it is possible to estimate how much deviation the air-fuel ratio has relative to the stoichiometric air-fuel ratio. This makes it possible to adjust the air-fuel ratio and control the fuel combustion so as to occur under the optimum conditions.

In order to measure the oxygen concentration within exhaust gas, an oxygen sensor is used. Since a high temperature of about 300°C or above is required in order for the oxygen sensor to operate suitably, a heater is provided in the oxygen sensor. An example of an oxygen sensor having a heater is shown in FIG. 14. In FIG. 14, the oxygen sensor 510 is shown exploded for clarity.

The oxygen sensor 510 includes a substrate 531 which is composed of an insulator, such as alumina, and a gas detection section 501 which is provided on a principal surface 531a of the substrate 531. The gas detection section 501 is composed of an oxide semiconductor, whose resistance value changes in accordance with the partial pressure of oxygen which is contained in the atmosphere. On the principal surface 531a of the substrate 531, electrodes 532 arranged to detect the resistance value of the gas detection section 501 are provided so as to be in contact with the gas detection section 501. Instead of a resistance-type as mentioned above, the gas detection section 501 may be an electromotive-force type in which a solid electrolyte is used.

On a rear surface 531b side of the substrate 531, a heater 502 is provided in a position corresponding to the gas detection section 501. The heater 502 is a heating element of a resistance-heating type, which achieves heating by utilizing a resistance loss when a current flows through the resistor. When a predetermined voltage is applied to electrodes 533 which extend from the heater 502, a current flows through the resistor having a predetermined shape, whereby the resistor generates heat and achieves heating. The heater 502 is formed by a screen printing technique or the like, using a metal material such as platinum. By elevating the temperature of the gas detection section 501 with the heater 502 to promptly activate the gas detection section 501, the detection accuracy right after the start of the internal combustion engine can be improved.

Since the resistance value of the heater 502 changes with temperature, by measuring the resistance value of the heater 502, it becomes possible to infer: the temperature of the heater 502; and the temperature of the gas detection section 501 (hereinafter also referred to as the "sensor temperature") which is in thermal contact with the heater 502 via a thin insulator (i.e., the substrate 531). By controlling the temperature of the heater 502 based on the inferred sensor temperature, the sensor temperature can be controlled to be within an appropriate range.

However, since the resistor of the heater 502 may vary in line width and/or thickness depending on the dimensional accuracy during the production process, the resistance value of the heater 502 may deviate or vary from its design value. Moreover, the resistance value of the heater 502 may also fluctuate through deterioration of the material of the resistor over time. Thus, the resistance value of the heater 502 contains an error (deviation from the design value).

Therefore, when a resistance value which is the same as the design value is used for control, the inferred sensor temperature may deviate from the actual sensor temperature because variations in resistance value-sensor temperature characteristics may occur with respect to each gas sensor (i.e., for each heater), or with time of usage. This may lead to being unable to control the sensor temperature to be within the desired range. In the case where a resistance-type gas detection section is used, the sensor output has high temperature dependence, and therefore this problem would make it difficult to control the air-fuel ratio with a high precision. Moreover, in recent years, since there is a need for controlling the air-fuel ratio with a higher precision, it is desired to accurately infer the sensor temperature also when using an electromotive-force type gas detection section. Furthermore, there is a possibility that the life of the gas sensor may be reduced when the actual sensor temperature is higher than the inferred sensor temperature because, even if the sensor temperature is controlled to constantly stay at about 700°C, for example, the actual sensor temperature will be higher than that.

For example, a temperature T and a resistance value R of the heater 502 at the temperature T can be expressed as eq. (1), by using a resistance value $R_0$ of the heater 502 at 0°C, a temperature coefficient of resistance α (which is a coefficient specific to the resistor material) of the heater 502, and an error δ in the resistance value.

$$R=R_0\cdot(1+\delta)\cdot(1+\alpha\cdot T) \quad \text{...eq. (1)}$$

Therefore, the temperature T when the error δ is zero (δ=0), i.e., true temperature, is expressed as eq. (2).

$$T=\{(R/R_0)-1\}/\alpha \quad \text{...eq. (2)}$$

On the other hand, the temperature T' when the error δ is not zero (δ≠0), i.e., incorrectly inferred temperature, is expressed as eq. (3).

$$T'=\{R_0\cdot(1+\delta)\cdot(1+\alpha\cdot T)/R_0-1\}/\alpha$$

$$=\{(1+\delta)\cdot(1+\alpha\cdot T)-1\}/\alpha$$

$$=T+\delta\cdot(1/\alpha+T) \quad \text{...eq. (3)}$$

Therefore, the temperature error ΔT is expressed as eq. (4).

$$\Delta T=T'-T=\delta\cdot(1/\alpha+T) \quad \text{...eq. (4)}$$

For example, when the material of the heater 502 is platinum, the temperature coefficient of resistance α is 0.4%/°C. Thus, when the true temperature T is 700°C, eq. (4) shows that the temperature error ΔT will be so large as ±35°C even if the error δ (variation due to e.g. the production process; i.e., individual difference of the heater 502) is only about ±5%.

In order to reduce the aforementioned deviation between the inferred temperature and the actual temperature, Japanese Laid-Open Patent Publication No. 2000-180406 discloses a technique which involves providing a correction resistance in series or parallel to the heater, or laser-trimming the heater in order to ensure that the resistance value of the heater equals the design value.

On the other hand, Japanese Laid-Open Patent Publication No. 2000-2678 discloses a technique of calculating the resistance value of a heater at room temperature from an inrush current which flows into the heater immediately after a voltage is applied to the heater and from the applied voltage, and performing control based on the calculated resistance value.

However, performing a correction for each gas sensor as disclosed in Japanese Laid-Open Patent Publication No. 2000-180406 would complicate the production steps, thus adding to the production cost. In the case of adopting the technique disclosed in Japanese Laid-Open Patent Publication No. 2000-2678, it is necessary to provide both a means for measuring the inrush current and a means for measuring the applied voltage; and, in practice, the heater temperature will keep increasing in the short time during which these measurements are taken, which makes it difficult to accurately calculate the heater resistance value at room temperature.

It might be possible to implement a calculation program in a microcomputer that supports a heater resistance value (resistance value at room temperature) which differs from gas sensor to gas sensor, however, such a technique would be very complicated and unpractical.

## SUMMARY OF THE INVENTION

In order to overcome the problems described above, preferred embodiments of the present invention provide a gas sensor which can compensate for an error in the resistance value of a heater in an accurate and simple manner.

A gas sensor according to a preferred embodiment of the present invention includes a gas detection section, a heater whose resistance value changes in accordance with temperature, and a control section arranged to control an operation of the heater and performing powering of the heater. The control section includes a current supply section arranged to supply a predetermined level of current to the heater in a period during which powering of the heater is stopped, a voltage detection section arranged to detect an end-to-end voltage of the heater while a current is being supplied to the heater from the current supply section, and a current adjustment section arranged to adjust, during a cold period of the heater, the level of the current which is supplied from the current supply section based on an ambient temperature and the end-to-end voltage of the heater as detected by the voltage detection section.

In a preferred embodiment, the current adjustment section adjusts the level of the current supplied from the current supply section so that the end-to-end voltage of the heater substantially equals a target voltage which is determined in accordance with the ambient temperature.

In a preferred embodiment, the control section further includes an ambient temperature detection section arranged to detect the ambient temperature.

In a preferred embodiment, the control section determines a temperature of the heater based on an end-to-end voltage of the heater which is detected while the level of current adjusted by the current adjustment section is being supplied to the heater, and adjusts a powering state of the heater so that the temperature of the heater has a value in a predetermined range.

In a preferred embodiment, the control section determines the temperature of the heater by using a correction formula which includes a quadratic or higher-order temperature coefficient of resistance of the heater.

In a preferred embodiment, the correction formula includes a correction factor for realizing a substantially equal distribution of positive and negative values of temperature errors.

In a preferred embodiment, the gas detection section detects oxygen.

An air-fuel ratio controller according to a preferred embodiment of the present invention includes a gas sensor of the aforementioned construction.

In a preferred embodiment, the air-fuel ratio controller according to the present invention further comprises an electrical control unit connected to the gas sensor. The electrical control unit also functions as the control section of the gas sensor.

A transportation apparatus according to another preferred embodiment of the present invention includes an internal combustion engine, and the air-fuel ratio controller of the aforementioned construction arranged to control an air-fuel ratio of the internal combustion engine.

In a preferred embodiment, the heater of the gas sensor is positioned so as to be exposed to an exhaust gas from the internal combustion engine.

In a preferred embodiment, the current adjustment section executes a current adjustment when the internal combustion engine is started.

A gas sensor according to a preferred embodiment of the present invention includes a control section arranged to control the operation of a heater and to perform powering of the heater for heating. Powering of the heater for heating is intermittently performed by repeating an ON operation and an OFF operation alternately. The control section includes a current supply section arranged to supply a predetermined level of current to the heater in a period during which powering of the heater for heating is stopped, and a voltage detection section arranged to detect an end-to-end voltage of the heater while a current is being supplied to the heater from the current supply section. This makes it possible to control the temperature of the heater in accordance with a voltage which is detected by the voltage detection section (which varies depending on the resistance value of the heater and therefore takes a value corresponding to the heater temperature). The control section further includes a current adjustment section arranged to adjust, during a cold period of the heater, the level of the current which is supplied from the current supply section based on an ambient temperature and the end-to-end voltage of the heater as detected by the voltage detection section. Thus, with this current adjustment section, the level of the current which is supplied from the current supply section is adjusted so as to counteract errors in the resistance value (i.e., so that a constant relationship exists between the temperature and the end-to-end voltage regardless of the magnitude of the error in the resistance value). In other words, the current adjustment section compensates for errors in the resistance value of the heater (any deviation from a design value associated with productional variations and fluctuations due to deterioration over time). Thus, it is possible to perform an accurate temperature measurement independent from errors in the resistance value of the heater.

Typically, the current adjustment section determines a certain target voltage in accordance with the ambient temperature, and adjusts the level of the current which is supplied from the current supply section so that the end-to-end voltage heater substantially equals the target voltage.

The control section may include an ambient temperature detection section arranged to detect the ambient temperature. Specifically, the ambient temperature detection section (e.g., an ambient temperature detection circuit) can detect the ambient temperature by measuring the temperature of a substrate supporting the gas detection section, the temperature of air suctioned into the internal combustion engine, or the like.

Typically, the control section determines (infers) the temperature of the heater based on an end-to-end voltage which is detected while the level of current adjusted by the current adjustment section is being supplied to the heater, and adjusts a powering state of the heater so that the temperature of the heater has a value in a predetermined range. In order to perform a more accurate temperature measurement, it is preferable that the control section determines the temperature of the heater by using a correction formula which includes a quadratic or higher-order temperature coefficient of resistance of the heater, and it is further preferable that the correction formula includes a correction factor used to realize a substantially equal distribution of positive and negative values of temperature errors.

The gas sensor according to a preferred embodiment of the present invention is suitably used as an oxygen sensor whose gas detection section detects oxygen, for example.

The gas sensor according to a preferred embodiment of the present invention is preferably used for an air-fuel ratio controller which controls an air-fuel ratio of an internal combustion engine. In this case, it may be possible to adopt a construction where an electrical control unit of the air-fuel ratio controller functions also as the control section of the gas sensor.

An air-fuel ratio controller having the gas sensor according to preferred embodiments of the present invention is suitably used in various types of transportation apparatuses. In a construction where the heater of the gas sensor is exposed to the exhaust gas from the internal combustion engine, the heater will experience a severe deterioration over time, thus adding to the significance of applying preferred embodiments of the present invention. Moreover, the current adjustment section may execute a current adjustment when the internal combustion engine is started, for example.

According to various preferred embodiments of the present invention, there is provided a gas sensor which can compensate for variations in the resistance value of a heater in an accurate and simple manner.

Other features, elements, processes, steps, characteristics and advantages of the present invention will become more apparent from the following detailed description of preferred embodiments of the present invention with reference to the attached drawings.

## BRIEF DESCRIPTION OF THE DRAWINGS

FIG. 1 is a block diagram schematically showing an oxygen sensor (gas sensor) 10 according to a preferred embodiment of the present invention.

FIG. 2 is an exploded perspective view showing a gas detection section and a heater included in the oxygen sensor 10 together with their neighboring structure.

FIG. 3 is a flowchart for explaining the timing with which to execute a current adjustment operation.

FIG. 4 is a diagram for specifically describing a current adjustment operation.

FIG. 5 is a circuit diagram showing an example of a specific construction of a V-I conversion circuit.

FIG. 6 is a flowchart showing a procedure of setting a target voltage in a current adjustment operation.

FIG. 7 is a flowchart showing a procedure of executing a current adjustment operation.

FIG. 8 is a graph showing a relationship between an output voltage from a differential amplifier and temperature.

FIG. 9 is a graph showing an error in the case where the heater temperature is inferred by employing preferable correction formulas (correction formulas including higher-order temperature coefficients of resistance of the heater).

FIG. 10 is a graph showing errors in the case of employing a correction formula which includes a correction factor for realizing a substantially equal distribution of positive and negative values of temperature errors.

FIG. 11 is a flowchart showing a procedure of executing a temperature error correction.

FIG. 12 is a diagram schematically showing an exemplary motorcycle incorporating the oxygen sensor 10.

FIG. 13 is a diagram schematically showing a control system of an engine in the motorcycle shown in FIG. 12.

FIG. 14 is an exploded perspective view schematically showing a conventional oxygen sensor 500.

## DETAILED DESCRIPTION OF PREFERRED EMBODIMENTS

Hereinafter, preferred embodiments of the present invention will be described with reference to the accompanying drawings. Although an oxygen sensor for detecting oxygen preferably is exemplified below, the present invention is not limited to an oxygen sensor, but can be suitably used for gas sensors including a heater.

FIG. 1 is a circuit diagram showing the construction of an oxygen sensor 10 according to a preferred embodiment of the present embodiment. As shown in FIG. 1, the oxygen sensor 10 includes a gas detection section 1, a heater 2 for elevating the temperature of the gas detection section 1, and a control section 3 for controlling the operation of the heater 2.

The gas detection section 1 detects the concentration and/or amount of a predetermined gas that is contained in an atmosphere which is in contact with the gas detection section 1. The gas detection section 1 of the present preferred embodiment is a so-called resistance type, whose resistance value changes in accordance with the partial pressure of a predetermined gas (which herein is preferably oxygen) that is contained in the atmosphere.

The resistance-type gas detection section 1 can suitably be composed of an oxide semiconductor, for example. An oxide semiconductor having a porous structure releases or absorbs oxygen in accordance with an oxygen partial pressure in the atmosphere. As a result, the oxygen concentration in the oxide semiconductor changes, whereby the resistance value of the oxide semiconductor changes. As the oxide semiconductor, titania (titanium dioxide) or ceria (cerium oxide) can be used, for example. It is preferable that the oxide semiconductor contains 50wt% or more of ceria. Note that an electromotive-force type gas detection section in which a solid electrolyte is used may be adopted as the gas detection section 1. An electromotive-force type gas detection section is disclosed in Japanese Laid-Open Patent Publication No. 8-114571, for example.

The heater 2 is a resistance-heating type heating element which achieves heating by utilizing a resistance loss. Specifically, the heater 2 is preferably constructed from a resistor which is composed of a metal material such as platinum or tungsten, or an oxide conductor such as rhenium oxide. By using the heater 2 to elevate the temperature of the gas detection section 1, the gas detection section 1 can be promptly activated.

Moreover, the heater 2 changes its resistance value (electrical resistance value) with temperature. Therefore, by measuring the resistance value of the heater 2, the temperature of the heater 2 can be detected. Since the heater 2 and the gas detection section 1 are in thermal contact via a thin insulator (a substrate as described later), the temperature of the gas detection section 1 can be detected by detecting the temperature of the heater 2. In other words, the heater 2 is used not only as a "heating element" for elevating the temperature of the gas detection section 1, but also as a "temperature detection element" for detecting the temperature of the heater 2 and the gas detection section 1.

FIG. 2 shows an example of the gas detection section 1 and the heater 2, together with their neighboring structure. As shown in FIG. 2, the gas detection section 1 is supported by a substrate 31. The substrate 31 is composed of an insulator (preferably a ceramic material) such as alumina or magnesia. The substrate 31 has a principal surface 31a and a rear surface 31b opposing each other, and a gas detection section (oxide semiconductor layer) 1 is provided on the principal surface 31a.

On the principal surface 31a, electrodes 32 for detecting the resistance value of the gas detection section 1 are defined. The electrodes 32 are composed of an electrically conductive material, such as a metal material, e.g., platinum, platinum-rhodium alloy, or gold. Preferably, the electrodes 32 are formed in a combteeth or interdigitated arrangement so as to be able to efficiently measure changes in the resistance value of the gas detection section 1.

Although not illustrated in the figures, a catalyst layer is provided on the gas detection section 1. The catalyst layer preferably includes a catalytic metal. Due to the catalytic action of the catalytic metal, at least one kind of substance other than the gas to be detected (i.e., oxygen) is decomposed. Specifically, any gas or microparticles (e.g., in the case where the atmosphere is exhaust gas, the hydrocarbon which has failed to completely combust, carbon, and nitrogen oxide) which may unfavorably affect the oxygen detection by the gas detection section 1 is decomposed, such gas or microparticles are prevented from attaching to the surface of the gas detection section 1. As a catalytic metal, platinum may be used, for example.

The heater 2 is provided on the rear surface 31b side of the substrate 31. Ends of the heater 2 are connected to electrodes 33a and 33b, as shown in FIG. 2. The electrodes 33a and 33b are used for supplying power to the heater 2 ("powering for heating"), and also for detecting the temperature of the heater 2 by measuring the resistance value of the heater 2. Preferably, the electrodes 33a and 33b are formed integrally with the heater 2. As will be described later, when the oxygen sensor 10 is provided in a transportation apparatus, the heater 2 will be exposed to an exhaust gas atmosphere, thus suffering from an even more severe deterioration over time.

Next, the functions of the control section 3 will be described. The control section 3 performs powering of the heater 2 for heating. More specifically, the control section 3 selectively executes an ON operation connecting power to the heater 2, or an OFF operation for stopping power to the heater 2. By executing the ON operation, the temperature of the heater 2 is increased (heating mode). By executing the OFF operation, the temperature of the heater 2 is decreased (cooling mode). However, according to the present preferred embodiment, not only the ON operation is performed but also the OFF operation is performed in the heating mode, in regularly-occurring short periods. In other words, in the heating mode for increasing the temperature of the heater 2, switching between the ON operation and the OFF operation periodically occurs. In the cooling mode for decreasing the temperature of the heater 2, the OFF operation is executed. The execution time of the ON operation and the execution time of the OFF operation preferably are each about 5 msec to about 50 msec, for example. Note that the adjustment of the temperature of the heater 2 does not need to be made through a single ON/OFF control (binary control), the applied voltage to the heater 2 may be controlled in multiple steps, for example.

The OFF operation in the heating mode is executed in order to measure the temperature of the heater 2 during the heating mode. The control section 3 in the present preferred embodiment includes a current supply section for supplying a predetermined level of current to the heater 2 in a period during which the OFF operation is being executed, and a voltage detection section for detecting an end-to-end voltage of the heater 2 while a current is being supplied to the heater 2 from the current supply section. Therefore, by supplying a current to the heater 2, the control section 3 performs an operation of detecting an end-to-end voltage of the heater 2 which changes depending on the resistance value of the heater 2 (hereinafter referred to as a "voltage detection operation"), and is able to control the temperature of the heater 2 in accordance with the voltage detected by the voltage detection operation. More specifically, based on the voltage detected by the voltage detection operation, the control section 3 is able to determine the temperature of the heater 2, and adjust the powering state of the heater 2 so that the temperature of the heater 2 has a value in a predetermined range.

The control section 3 in the present preferred embodiment preferably further includes a compensation section arranged to perform, in a period from when the heater 2 is at room temperature to when the ON operation is begun (i.e., during a cold period of the heater 2), an operation of compensating for an error in the resistance value of the heater 2 (i.e., any deviation from a design value associated with productional variations and fluctuations due to deterioration over time). Specifically, this compensation section is a current adjustment section which adjusts the level of the current supplied from the current supply section based on the ambient temperature and the end-to-end voltage of the heater detected by the voltage detection section. For example, the current adjustment section adjusts the level of the current supplied from the current supply section so that the end-to-end voltage of the heater 2 substantially equals a target voltage which is determined in accordance with the ambient temperature. By performing a voltage detection operation by using the level of current having been adjusted through the above-described operation of the current adjustment section, it becomes possible to realize an accurate temperature measurement which is free from an error in the resistance value of the heater 2. Hereinafter, the reason why an error in the resistance value of the heater 2 is compensated for by the aforementioned current adjustment operation will be described.

First, an end-to-end voltage $V_R$ of the heater 2 when a weak current I (which typically is about 1/30 or less of the current for heating the heater 2) is flowing through the heater 2 is expressed by eq. (5), by using a temperature T of the heater 2, a resistance value $R_0$ of the heater 2 at about 0°C, a temperature coefficient (which is a coefficient specific to the resistor material) $\alpha$ of resistance of the heater 2, and an error $\delta$ in the resistance value of the heater 2 (i.e., deviation from a design value of the resistance value).

$$V_R = I \cdot R_0 \cdot (1+\delta) \cdot (1+\alpha \cdot T) \quad \text{...eq. (5)}$$

In the current adjustment operation, the level of the current I flowing through the heater 2 is adjusted so that the end-to-end voltage $V_R$ equals a target voltage $V_{set}$ which is set in accordance with the ambient temperature (i.e., temperature during a cold period) $T_a$. The target voltage $V_{set}$ is expressed as eq. (6).

$$V_{set} = V_0 + V_a \quad \text{...eq. (6)}$$

Herein, $V_0$ is a target voltage when the ambient temperature $T_a$ is about 0°C, and is set to an appropriate value that makes the current I sufficiently weak (e.g., about 0.1 V). $V_a$ is an increment in the target voltage which is in accordance with the level of the ambient temperature $T_a$ (i.e., an increment from when the ambient temperature $T_a$ is about 0°C).

When the ambient temperature $T_a$ is about 0°C, if the end-to-end voltage $V_R$ is set to the target voltage $V_{set}=V_0$, the target voltage $V_0$ when the ambient temperature $T_a$ is about 0°C is expressed as eq. (7), from eq. (5).

$$V_0 = I \cdot R_0 \cdot (1+\delta) \quad \text{...eq. (7)}$$

On the other hand, by substituting the end-to-end voltage $V_R$ expressed by eq. (5) for the target voltage $V_{set}$ expressed by eq. (6), eq. (8) is obtained, utilizing eq. (7).

$$V_0+V_a= I\cdot R_0\cdot(1+\delta)\cdot(1+\alpha\cdot T_a)$$

$$=V_0\cdot(1+\alpha\cdot T_a) \qquad ...eq.\ (8)$$

Therefore, as shown in eq. (9), the increment $V_a$ is expressed as a value obtained by multiplying $V_0$ by the temperature coefficient of resistance $\alpha$ and the ambient temperature $T_a$.

$$V_a= V_0\cdot\alpha\cdot T_a \qquad ...eq.\ (9)$$

Therefore, as shown in eq. (10), the target voltage $V_{set}$ which is set in accordance with the ambient temperature $T_a$ is expressed in terms of $V_0$, the temperature coefficient of resistance $\alpha$, and the ambient temperature $T_a$.

$$V_{set}=V_0+V_a=V_0+V_0\cdot\alpha\cdot T_a=V_0\cdot(1+\alpha\cdot T_a) \qquad ...eq.\ (10)$$

From the above equations, ultimately, the end-to-end voltage $V_R$ of the heater 2 is expressed by eq. (11), which does not contain the error $\delta$ and whose only parameters are the target voltage $V_0$ corresponding to the ambient temperature $T_a$=0 (which is a predetermined value regardless of the actual resistance value of the heater 2), the temperature coefficient of resistance $\alpha$, and the temperature T.

$$V_R=V_0\cdot(1+\alpha\cdot T) \qquad ...eq.\ (11)$$

As described above, by performing a voltage detection operation by using a level of current having been adjusted through the current adjustment operation, it becomes possible to realize an accurate temperature measurement, independent from errors in the resistance value of the heater 2. The error in the resistance value of the heater 2 is compensated for by the current adjustment operation because the current adjustment operation adjusts the level of the current used in the voltage detection operation so as to counteract the error $\delta$ in the resistance value (i.e., so that the temperature T and the end-to-end voltage $V_R$ have a constant relationship regardless of the magnitude of the error $\delta$ in the resistance value).

Next, the timing with which to execute the aforementioned current adjustment operation will be described.

For example, in the case where the oxygen sensor 10 is mounted in a transportation apparatus having an engine, the current adjustment operation may be executed in response to an engine starting operation which is performed by the operator, i.e., immediately after the main switch of the engine is turned ON, while the ambient temperature $T_a$ (i.e., the temperature in the exhaust pipe) is as low as approximately room temperature. The current adjustment operation does not need to be executed when the ambient temperature $T_a$ is high, e.g., immediately after the main switch of the engine is turned OFF, or when the engine is restarted promptly thereafter.

FIG. 3 is a flowchart for explaining the timing with which to execute the current adjustment operation. When the engine is started, the ambient temperature $T_a$ is measured first (step S1). Next, a comparison is made between the measured ambient temperature $T_a$ and the predetermined value A (e.g. about 50°C)(step S2). If the ambient temperature $T_a$ is less than a predetermined value A ($T_a$<A), the current adjustment operation is executed (step S3), and the powering current value for the heater 2 is updated (step S4). On the other hand, if the ambient temperature $T_a$ is equal to or greater than the predetermined value A ($T_a \geqq$ A), the current adjustment operation is not executed.

Note that the current adjustment operation does not need to be executed every time the engine is started. The current adjustment operation may be executed at an engine start when a predetermined time has elapsed since the previous run of the current adjustment operation, or may be executed on a regular basis, e.g., with a frequency of once a week or once a month. When the current adjustment operation is not executed at an engine start, the setting value from the previous run (or a predefined value) may be adopted as the current value when executing the voltage detection operation. Furthermore, the operating time of the engine may be accumulated, and a current adjustment operation may be executed every time the accumulated value reaches a predetermined value. Through the first run of the current adjustment operation, variations in the resistance value of the heater 2 associated with the production process are compensated for. Through the second run of the current adjustment operation and onwards, fluctuations in the resistance value of the heater 2 associated with deterioration over time will be compensated for.

Next, referring back to FIG. 1, the specific construction of the control section 3 will be described. In the present preferred embodiment, an engine controller of the transportation apparatus also functions as the control section 3 of the oxygen sensor 10. As will be appreciated, however, the present invention is not to be limited to such a construction. The gas detection section 1 is electrically connected to the control section 3 via the electrodes 32, and the heater 2 is electrically connected to the control section 3 via the electrodes 33a and 33b.

As shown in FIG. 1, the control section 3 includes an ambient temperature detection circuit 4, a resistance-voltage conversion circuit 5 which is connected to the gas detection section 1, a constant-current circuit 6 and an end-to-end voltage detection circuit 7 which are connected to the heater 2, and a controller 8 which receives the outputs from the ambient temperature detection circuit 4, the resistance-voltage conversion circuit 5, and the end-to-end voltage detection circuit 7. The controller 8 in the present preferred embodiment is preferably implemented as a single-chip microcomputer, for example. The constant-current circuit 6, the end-to-end voltage detection circuit 7, and the controller 8 function respectively as the aforementioned current supply section, the voltage detection section, and the current adjustment section.

The control section 3 further includes a sensor input circuit 9 which is connected to various sensors (not shown; a throttle sensor, a water temperature sensor, etc.), such that the output from the sensor input circuit 9 is also input to the controller 8. Moreover, an actuator output circuit 11 is connected to the controller 8, and the operation of various elements of the engine are controlled by the output from the actuator output circuit 11.

The ambient temperature detection circuit 4 detects the ambient temperature $T_a$ around the oxygen sensor 10. The ambient temperature detection circuit 4 preferably includes a thermistor, for example, and is able to detect the ambient temperature $T_a$ by measuring the temperature of the substrate 31, the temperature of air suctioned into the internal combustion engine, or the like. Note that it is not necessary to employ a thermistor to detect the ambient temperature $T_a$. The ambient temperature $T_a$ may be detected by using the output from a water temperature sensor which measures the temperature of cooling water of the internal combustion engine, or the output from an exhaust temperature sensor which measures the temperature of exhaust gas (i.e., these elements may be allowed to function as the ambient temperature detection section).

The output of the ambient temperature detection circuit 4 is input to an analog-digital converter (ADC) 13 via a selector 12 of the controller 8. From the ADC 13, a digital value (a value indicating the ambient temperature $T_a$) corresponding to the output (analog value) from the ambient temperature detection circuit 4 is output to a data bus line 14 in the controller 8. As has already been described, the controller 8 preferably includes a single-chip microcomputer, which includes a CPU (central processing unit) 15, a ROM (read only memory) 16, a RAM (random access memory) 17, as well as a timer 18, a sensor interface (SIF) circuit 19, an actuator interface (AIF) circuit 20, etc. Exchange of commands from the CPU 15, data having been read from the ROM 16, and the like is performed via the data bus line 14. The SIF circuit 19, which includes an ADC, a timer, a port, etc., is connected to the sensor input circuit 9. The AIF circuit 20, which includes a DAC, a timer, a port, etc., is connected to the actuator output circuit 11.

The resistance-voltage conversion circuit 5 measures the resistance value Rg of the gas detection section 1, and outputs a voltage which is in accordance with the measured resistance value Rg (resistance-voltage conversion). The resistance-voltage conversion circuit 5 is controlled by data (e.g., 2-bit data) which is generated inside the controller 8 and fed from a port 21. By measuring the resistance value Rg of the gas detection section 1 with the resistance-voltage conversion circuit 5, an oxygen concentration within the ambient gas can be determined. The output (voltage) from the resistance-voltage conversion circuit 5 connected to the gas detection section 1 is input to the ADC 13 via the selector 12. From the ADC 13, a digital value (a value indicating oxygen concentration) corresponding to the output (analog value) from the resistance-voltage conversion circuit 5 is output to the data bus line 14.

The end-to-end voltage detection circuit 7 detects a voltage (end-to-end voltage) $V_R$ which is being applied to both ends of the heater 2 when a predetermined level of current I is supplied to the heater 2. Since the end-to-end voltage $V_R$ of the heater 2 depends on temperature, as also shown by eq. (11), the temperature of the heater 2 can be determined from the detected voltage value. Since the heater 2 is in thermal contact with the gas detection section 1 via a thin insulating layer (i.e., the substrate 31), by detecting the temperature of the heater 2 and controlling the temperature of the heater 2 to be within a predetermined range, it becomes possible to also control the temperature of the gas detection section 1 to be within an appropriate range.

In addition to the constant-current circuit (current supply section) 6 for supplying a current to the heater 2, the control section 3 includes a power circuit 22 for generating a power voltage which is necessary for the operation of each electronic circuit within the control section 3, the power circuit 22 being preferably connected to a +12 V power supply (battery). Whereas the current which is supplied from the power supply to the heater 2 is used for heating the heater 2, the current which is supplied from the constant-current circuit 6 to the heater 2 is used for measuring the resistance value of the heater 2.

As the port 23 of the controller 8 switches a semiconductor switching element 25 to be ON or OFF via a gate drive 24, the heater 2 is selectively connected to the +12 V power supply or to the constant-current circuit 6, via the electrodes 33a and 33b shown in FIG. 2. When heating the heater 2, the heater 2 and the power supply are connected. When measuring the temperature of the heater 2, the semiconductor switching element 25 operates so that the destination to which the heater 2 is connected is switched from the power supply to the constant-current circuit 6. Note that a diode 26 is provided to ensure that the current from the power supply will not flow into the constant-current circuit 6 when heating the heater 2, thus imparting directionality to the current. The level of the weak current which is supplied from the constant-current circuit 6 is controlled by the output voltage from the digital-analog converter (DAC) 27. Unless the level of the current is adjusted by the current adjustment operation, the constant-current circuit 6 supplies a constant level of current to the heater 2.

When the heater 2 is connected to the constant-current circuit 6, a current I of a predetermined level flows from the constant-current circuit 6 to the heater 2 via the electrodes 33b and 33c, so that the end-to-end voltage detection circuit 7 connected to the electrodes 33b and 33c detects the end-to-end voltage $V_R$ of the heater 2. The current I supplied from the constant-current circuit 6 is weak, and at a level such that the heater 2 is substantially unheated (e.g., no less than about 10 mA and no more than about 50 mA). Detection of the end-to-end voltage $V_R$ occurs in a short period of time (e.g., about 1 ms to about 5 ms). Since a predetermined relationship exists between the end-to-end voltage $V_R$ of the heater 2 and temperature, it is possible to infer the temperature of the heater 2 (which also corresponds to the temperature of the gas detection section 1) based on the value of the detected voltage.

Specifically, a voltage Vh which is obtained through a differential amplification (XA) of the end-to-end voltage $V_R$ of the heater 2 and the end-to-end voltage $V_T$ at about 0°C is subjected to an analog-digital conversion by the ADC 13, and the temperature is calculated by a program in the controller 8 (single-chip microcomputer). The end-to-end voltage $V_T$ at about 0°C is generated by subjecting the output voltage from the port 28 of the controller 8 to a voltage division.

Note that, in the present preferred embodiment, the single ADC 13 is preferably used for applying an analog-digital conversion to all outputs from the ambient temperature detection circuit 4, the resistance-voltage conversion circuit 5, and the end-to-end voltage detection circuit 7. The timing with which the ambient temperature $T_a$ is detected, the timing with which the resistance value Rg of the gas detection section 1 is measured, and the timing with which the end-to-end voltage $V_R$ of the heater 2 is detected are all shifted relative to one another. Therefore, through the switching operation by the selector 12, it is possible to efficiently perform various analog-digital conversions by using the single ADC 13.

Now, referring back to FIG. 3, the timing with which to execute the current adjustment operation will be described more specifically. When the engine is started, first, a measurement of the ambient temperature $T_a$ is taken by the ambient temperature detection circuit 4 (step S1). The output from the ambient temperature detection circuit 4 is input to the ADC 13 via the selector 12, and a digital signal indicating the ambient temperature $T_a$ is output from the ADC 13 to the data bus line 14 in the controller 8. Next, the CPU 15 performs a comparison between the measured ambient temperature $T_a$ and a predetermined value A (e.g., about 50°C; stored in the ROM 16) (step S2). When the CPU 15 determines that the ambient temperature $T_a$ is less than the predetermined value A ($T_a$<A), a current adjustment operation by the controller 8 is executed (step S3). When the current adjustment operation is executed, a powering current value for the heater 2 which has been stored in the RAM 17 is rewritten, thus, updating the powering current value (step S4). On the other hand, when the CPU 15 determines that the ambient temperature $T_a$ is equal to or greater than the predetermined value A ($T_a \geqq A$), the current adjustment operation is not executed.

Next, with reference to FIG. 4, the current adjustment operation of the control section 3 will be described more specifically.

First, when the main switch of the engine is turned ON, before beginning powering of the heater 2 for heating (i.e., during a cold period of the heater 2), the output voltage from the port 28 of the controller 8 is set to about 0 V, and the output voltage $V_T$ from a voltage divider 29 in the end-to-end voltage detection circuit 7 is set to about 0 V. At this time, the output voltage Vh from the differential amplifier 30 in the end-to-end voltage detection circuit 7 is expressed as eq. (12), by using the weak current I flowing in the heater 2, the resistance value Rh of the heater 2 during a cold period, and the gain A of the differential amplifier 30.

$$Vh = A \cdot I \cdot Rh \quad \ldots eq. (12)$$

Herein, the resistance value Rh of the heater 2 during a cold period is expressed as eq. (13), by using the temperature coefficient of resistance $\alpha$ of the heater 2, the resistance value $R_0$ of the heater 2 at about 0°C, and the ambient temperature $T_a$.

$$Rh=R_0\cdot(1+\alpha\cdot T_a)\quad ...eq.\ (13)$$

Therefore, the output voltage Vh from the differential amplifier 30 is expressed as eq. (14).

$$Vh=A\cdot I\cdot R_0\cdot(1+\alpha\cdot T_a)\quad ...eq.\ (14)$$

Through adjustment of the output from the DAC 27, the weak current I (which is the output from the V-I conversion circuit (constant-current circuit) 6) is changed so that the output voltage Vh from the differential amplifier 30 equals the target voltage $V_{set}$ (i.e., $Vh=V_{set}$). The current I at this time is expressed as eq. (15).

$$I=V_{set}/\{A\cdot R_0\cdot(1+\alpha\cdot T_a)\}\quad ...eq.\ (15)$$

While maintaining the weak current I thus set, the output voltage from the port 28 of the controller 8 is set to the power voltage ($V_{DD}$), and powering of the heater 2 for heating is begun in such a manner that Vh at about 0°C equals about 0 V, thus performing temperature control and temperature measurement (voltage detection operation).

The output voltage Vh from the differential amplifier 30 during the voltage detection operation is expressed as eq. (16).

$$Vh=A\cdot(I\cdot Rh-V_T)$$

$$=A\cdot\{I\cdot R_0\cdot(1+\alpha\cdot T)-V_T\}\quad ...eq.\ (16)$$

In order to ensure that the Vh at about 0°C equals about 0V, a ratio of voltage division D of the voltage divider 29 needs to satisfy the relationship of eq. (17).

$$V_T=V_{DD}\cdot D=I\cdot R_0\quad ...eq.\ (17)$$

Accordingly, eq. (16) is transformed into eq. (18).

$$Vh=A\cdot\{I\cdot R_0\cdot(1+\alpha\cdot T)-I\cdot R_0\}$$

$$=A\cdot I\cdot\{R_0\cdot(1+\alpha\cdot T)-R_0\}$$

$$=[V_{set}\cdot\{R_0\cdot(1+\alpha\cdot T)-R_0\}]/\{R_0\cdot(1+\alpha\cdot T_a)\}\quad ...eq.\ (18)$$

The target voltage $V_{set}$ is expressed as eq. (10) by using the target voltage $V_0$ corresponding to the ambient temperature $T_a$=0, the temperature coefficient of resistance $\alpha$, and the ambient temperature $T_a$ during a cold period. Therefore, as is shown by eq. (19), the output voltage Vh from the differential amplifier 30 contains the $V_0$, the temperature coefficient of resistance $\alpha$, and the temperature T as its only parameters.

$$Vh=[V_0\cdot(1+\alpha\cdot T_a)\cdot\{R_0\cdot(1+\alpha\cdot T)-R_0\}]/\{R_0\cdot(1+\alpha\cdot T_a)\}$$

$$=V_0\cdot\alpha\cdot T \qquad \text{...eq. (19)}$$

Thus, with the oxygen sensor 10 of the present preferred embodiment, errors in the resistance value of the heater 2 are compensated for, through a current adjustment operation which is performed by the current adjustment section during a cold period of the heater 2. Therefore, through a voltage detection operation, an accurate temperature not influenced by the errors in the resistance value of the heater 2 can be inferred (determined). Note that, a "cold period" of the heater 2 literally means a period during which the heater 2 is sufficiently cool, and refers to any period when the temperature of the heater 2 is equal to or less than a predetermined temperature which is sufficiently lower than the operating temperature (a temperature at which the gas detection section 1 is sufficiently activated and detection of an oxygen concentration is actually performed) of the oxygen sensor 10 (e.g., about 50°C or less, as has already been exemplified).

An example of a specific construction of the V-I conversion circuit (constant-current circuit) 6 is shown in FIG. 5. The V-I conversion circuit 6 shown in FIG. 5 preferably includes a plurality of resistors R1 to R9, a capacitor C1, an amplifying element A1, and a transistor T1. With these circuit elements, the V-I conversion circuit 6 converts an input voltage from the DAC 27 to a predetermined level of current, and outputs it to the heater 2 via the diode 26. It will be appreciated that the types, number, positioning, etc. of circuit elements composing the V-I conversion circuit 6 are not limited to what is exemplified in FIG. 5.

FIG. 6 and FIG. 7 are flowcharts showing a procedure of setting the target voltage $V_{set}$ and a procedure of executing a current adjustment operation, respectively.

When setting the target voltage $V_{set}$, as shown in FIG. 6, a detection of the ambient temperature $T_a$ is performed first (step S11). Next, from the detected ambient temperature $T_a$, a value of the target voltage $V_{set}$ is determined based on a target voltage adjustment formula (e.g., eq. (10))(step S12). Thereafter, the determined value of the target voltage $V_{set}$ is retained (step S13).

When performing a current adjustment operation, as shown in FIG. 7, the output voltage $V_T$ from the voltage divider 29 is first set to about 0V (step S21), and the count of number of adjustments N is set to 1 (step S22). Next, powering for the heater 2 is performed (step S23). The level ΔI of current at this time is a half of the maximum value $I_{MAX}$ (i.e., $I_{MAX}/2$).

Next, an output voltage Vh from the differential amplifier 30 (hereinafter also referred to as the "heater voltage") is measured (step S24), and a comparison is made between the heater voltage Vh and the target voltage $V_{set}$ (step S25). If the heater voltage Vh is less than the target voltage $V_{set}$ ($Vh<V_{set}$), the level ΔI of powering current is increased by $I_{MAX}/(2\cdot N)$ (step S26). On the other hand, if the heater voltage Vh is equal to or greater than the target voltage $V_{set}$ ($Vh \geqq V_{set}$), the level ΔI of powering current is decreased by $I_{MAX}/(2\cdot N)$ (step S27).

Next, the count of the number of adjustments N is incremented by one (step S28), and it is determined whether the number of adjustments N is equal to or greater than a predetermined value $N_{set}$ (step S29). If the number of adjustments N is less than the predetermined value $N_{set}$ ($N<N_{set}$), a series of steps from the measurement of the heater voltage Vh (step S24) to the comparison between the number of adjustments N and the predetermined value $N_{set}$ (step S29) are repeated. If the number of adjustments N is equal to or greater than the predetermined value $N_{set}$ ($N \geqq N_{set}$), the present level ΔI of powering current is retained (step S30), and the output voltage $V_T$ from the voltage divider 29 is set to a predetermined value (a value that causes the Vh at about 0°C to be about OV)(step S31).

By performing the adjustment of the level ΔI of powering current (increase or decrease of step S26 or step S27) eight times, for example, (i.e., by setting the predetermined value $N_{set}$ to 8), the heater voltage Vh can be brought sufficiently close to the target voltage $V_{set}$. As a result, the current adjustment operation can be completed in a very short period of time of about several msec to about several dozen msec.

The oxygen sensor 10 of the present preferred embodiment compensates for errors in the resistance value of the heater 2 through the current adjustment operation as described above. This makes it unnecessary to individually perform a correction for each gas sensor (a correction to be made in accordance with the resistance value of an actually-produced heater), unlike in the technique disclosed in Japanese Laid-Open Patent Publication No. 2000-180406. On the other hand, in the technique disclosed in Japanese Laid-Open Patent Publication No. 2000-2678, the heater temperature might increase during the measurement of an inrush current and an applied voltage, thus making it difficult to perform an accurate compensation. However, with the oxygen sensor 10 of the present preferred embodiment, the temperature of the heater 2 undergoes hardly any increase associated with the current adjustment operation which is performed for the purpose of compensation; thus, the aforementioned problem is avoided. Thus, in accordance with the oxygen sensor 10 of the present preferred embodiment, errors (productional variations and fluctuations due to deterioration over time) in the resistance value of the heater 2 can be compensated for in an accurate and simple manner.

Next, a technique for further reducing the inference error of the temperature of the heater 2 will be described. As has already been described, by performing the current adjustment operation, the oxygen sensor 10 of the present preferred embodiment is able to reduce inference errors that are caused by errors in the resistance value of the heater 2. However, depending on how the relationship between the resistance value of the heater 2 and temperature is approximated (i.e., what sort of relational expression is used for the approximation), some errors may occur between the temperature and the actual temperature. Such inference errors can be reduced by a technique described below.

Since the temperature coefficient of resistance of the heater 2 relies on temperature, the relationship between the resistance value of the heater 2 and temperature is not linear. Therefore, simply approximating the resistance value of the heater 2 with a linear equation of temperature (i.e., linear approximation) may possibly result in large inference errors. Some conceivable methods for solving this problem might be: using polygonal-line characteristics for approximating the relationship between the resistance value of the heater 2 and temperature (in the case of an analog circuit); or providing a detailed mapping of the relationship between the resistance value of the heater 2 and temperature on a non-volatile memory (in the case of a digital circuit). However, inference errors can be reduced even more simply by using the technique described below.

Specifically, it is preferable that the control section 3 determines the temperature of the heater 2 by using a correction formula which includes a quadratic or higher-order temperature coefficient of resistance of the heater 2. Through such a determination of temperature, the difference between the actual temperature and the inferred temperature can be made small (e.g., to about ± 5°C or less). Hereinafter, this will be described more specifically.

The relationship between the temperature T of the heater 2 and the resistance value Rh is expressed by a polynomial including a linear term and a quadratic term of the temperature T, such as eq. (20). In eq. (20), $\alpha$ is a linear temperature coefficient of resistance of the heater 2, and $\beta$ is a quadratic temperature coefficient of resistance of the heater 2. As $\alpha$ and $\beta$, either theoretical values or measured values may be used.

$$Rh=R_0\cdot(1+\alpha\cdot T-\beta\cdot T^2) \quad \text{...eq. (20)}$$

Now, eq. (20) is converted into a relational expression between the output voltage Vh from the differential amplifier 30 and the temperature T, thus giving eq. (21).

$$Vh=I\cdot A\cdot\{R_0\cdot(1+\alpha\cdot T-\beta\cdot T^2)-R_0\}=V_0\cdot(\alpha\cdot T-\beta\cdot T^2) \quad \text{...eq. (21)}$$

Note that $V_0$ in eq. (21) is the output voltage at T=0°C, which is expressed by eq. (22).

$$V_0=I\cdot A\cdot R_0 \quad \text{...eq. (22)}$$

Based on eq. (21), an inverse function for converting the output voltage Vh to the temperature T is created. Specifically, as shown in FIG. 8, the output voltage Vh at a given sufficiently-large temperature Tp is defined as Vp, and a line connecting the point Vh=0 and the point Vh=Vp is imagined. Then, a gradient k of this hypothetical line is expressed as eq. (23). Note that the actual relationship between the output voltage Vh and the temperature T is non-linear, as shown in FIG. 8.

$$k=Vp/Tp=\{V_0\cdot(\alpha\cdot Tp-\beta\cdot Tp^2)\}/Tp$$

$$=V_0\cdot(\alpha-\beta\cdot Tp) \quad \text{...eq. (23)}$$

Moreover, this hypothetical line can be expressed by eq. (24), assuming an inferred temperature $T_E$ when a linear equation is used to express the relationship between the output voltage Vh and the temperature T.

$$Vh=k\cdot T_E \quad ...eq.\ (24)$$

Based on eq. (21), eq. (23), and eq. (24), an equation for deriving T from $T_E$ will be created, which first gives eq. (25) below.

$$V_0\cdot(\alpha-\beta\cdot Tp)\cdot T_E=V_0\cdot(\alpha\cdot T-\beta\cdot T^2) \quad ...eq.\ (25)$$

Dividing both sides of eq. (25) by $V_0$ (eq. (26)), a further transformation gives eq. (27).

$$(\alpha-\beta\cdot Tp)\cdot T_E=(\alpha\cdot T-\beta\cdot T^2) \quad ...eq.\ (26)$$

$$T=[\alpha-\sqrt{\{\alpha^2-4\cdot\beta\cdot(\alpha-\beta\cdot Tp)\cdot T_E\}}]/(2\cdot\beta)$$

$$=[1-\sqrt{\{1-4\cdot(\beta/\alpha)\cdot(1-(\beta/\alpha)\cdot Tp)\cdot T_E\}}]/\{2\cdot(\beta/\alpha)\} \quad ...eq.\ (27)$$

From eq. (27), T can be expressed by a polynomial of $T_E$, as shown in eq. (28).

$$T\approx[2\cdot(\beta/\alpha)\cdot\{1-(\beta/\alpha)\cdot Tp\}/\{2\cdot(\beta/\alpha)\}]\cdot T_E$$

$$+[2\cdot(\beta/\alpha)^2\cdot\{1-(\beta/\alpha)\cdot Tp\}^2/\{2\cdot(\beta/\alpha)\}]\cdot T_E^2$$

$$+[4\cdot(\beta/\alpha)^3\cdot\{1-(\beta/\alpha)\cdot Tp\}^3/\{2\cdot(\beta/\alpha)\}]\cdot T_E^3+\cdots$$

$$=\{1-(\beta/\alpha)\cdot Tp\}\cdot T_E+(\beta/\alpha)\cdot\{1-(\beta/\alpha)\cdot Tp\}^2\cdot T_E^2$$

$$+2\cdot(\beta/\alpha)^2\cdot\{1-(\beta/\alpha)\cdot Tp\}^3\cdot T_E^3+\cdots$$

$$=T_E-(\beta/\alpha)\cdot(Tp-T_E)\cdot T_E-2\cdot(\beta/\alpha)^2\cdot(Tp-T_E)\cdot T_E^2+\delta \quad ...eq.\ (28)$$

On the right-hand side of eq. (28), the first term $T_E$ is a temperature which is inferred from a simple linear equation (hypothetical line), and the second and subsequent terms are correction terms. Eq. (28) implies that insufficiencies in the correction provided by the second term are remedied by the correction provided by the third term. Note that the hypothetical line and the actual characteristic curve intersect when T=0 and when T=Tp, so that the error becomes zero. This is the reason why $(Tp-T_E)\cdot T_E$ and $(Tp-T_E)\cdot T_E^2$ are included as variables in the polynomial.

The effects (simulation results) that are obtained by using a correction formula as shown by eq. (28) are illustrated in FIG. 9. It can be seen from FIG. 9 that, as compared to the case where no correction is performed (i.e., the temperature is inferred from a linear equation), the errors are reduced by adding a quadratic correction term (i.e., the second term on the right-hand side of eq. (28)), and further reduced (specifically, to 5°C or less) by adding a cubic correction term (i.e., the third term on the right-hand side of eq. (28)).

As described above, by determining the temperature of the heater 2 with a correction formula which includes a quadratic or higher-order temperature coefficient of resistance of the heater 2, the control section 3 is able to further reduce the inference errors. Although the above description illustrates an example where the correction formula includes a quadratic temperature coefficient of resistance $\beta$ in addition to a linear temperature coefficient of resistance $\alpha$, it is also possible to use a correction formula which further includes a cubic or higher-order temperature coefficient of resistance.

Moreover, as shown in FIG. 9, the errors after correction are all positive. Therefore, the errors can be further reduced by distributing the errors after correction to both positive and negative sides. For example, by ensuring a substantially equal distribution of positive and negative values of error, the errors can be reduced to about a half.

In order to distribute errors to both positive and negative sides, the coefficients of the quadratic correction term and the cubic correction term may be made greater than necessary, so as to cause an overcompensation. For example, by using a correction formula which includes up to a cubic correction term, and setting the coefficient of the cubic correction term to be about 1.22 times as large, errors can be significantly reduced to about $\pm$2°C or less in the range from about 0 to about 1000°C, as shown in FIG. 10.

Thus, when the correction formula includes correction factors for realizing a substantially equal distribution of positive and negative values of temperature errors, the inference errors of temperature can be further reduced. When eq. (28) is expressed as eq. (29), it is preferable that the correction factor p included in the cubic correction term is about 2 to about 2.5, specifically.

$$T \approx T_E - (\beta/\alpha) \cdot (Tp - T_E) \cdot T_E - p \cdot (\beta/\alpha)^2 \cdot (Tp - T_E) \cdot T_E^2 \quad \text{...eq. (29)}$$

Although the minuscule portion $\delta$ from eq. (28) is omitted in eq. (29) for simplicity, this omission can be compensated for by adjusting the correction factor p.

FIG. 11 shows a flowchart of a procedure of executing the above-described temperature error correction. First, the data "0" of the heater voltage (output voltage from the differential amplifier 30) $V_0$ when T=0°C is acquired (step S41), and then the data "p" of the heater voltage Vp when T=Tp°C is acquired (step S42).

Next, from the acquired data 0 and p, an equation $T_E$=Vh/k (which is a transformation of eq. (24)) for inferring the temperature through linear approximation is generated (step S43). Then, the heater voltage Vh at a given temperature is detected (step S44), and the temperature $T_E$ at that time is inferred (calculated) from the equation $T_E$=Vh/k (step S45).

Thereafter, a temperature correction is executed from $T_E$, Tp, and the temperature coefficients of resistance $\alpha$ and $\beta$, thus calculating the actual temperature T (step S46). In this manner, a correction for the temperature error can be performed.

Next, a vehicle which incorporates the oxygen sensor 10 according to the present preferred embodiment and which employs an internal combustion engine as a driving source will be described. FIG. 12 schematically shows a motorcycle 300 incorporating the oxygen sensor 10.

As shown in FIG. 12, the motorcycle 300 includes a body frame 301 and an engine (for example, an internal combustion engine) 100. A head pipe 302 is provided at the front end of the body frame 301. To the head pipe 302, a front fork 303 is attached to be capable of swinging in the right-left direction. At the lower end of the front fork 303, a front wheel 304 is supported so as to be capable of rotating. Handle bars 305 are attached to the upper end of the head pipe 302.

A seat rail 306 is attached at an upper portion of the rear end of the body frame 301 so as to extend in the rear direction. A fuel tank 307 is provided above the body frame 301, and a main seat 308a and a tandem seat 308b are provided on the seat rail 306. Moreover, rear arms 309 extending in the rear direction are attached to the rear end of the body frame 301. At the rear end of the rear arms 309, a rear wheel 310 is supported so as to be capable of rotating.

The engine 100 is held at the central portion of the body frame 301. A radiator 311 is provided in front of the engine 100. An exhaust pipe 312 is connected to an exhaust port of the engine 100. As will be specifically described below, an oxygen sensor 10, a catalyst 104, and a muffler 106 are provided on the exhaust pipe (in an ascending order of distance from the engine 100). The top end of the oxygen sensor 10 is exposed in a passage within the exhaust pipe 312 in which exhaust gas travels. Thus, the oxygen sensor 10 detects oxygen within the exhaust gas. The oxygen sensor 10 has the heater 2 as shown in FIG. 2, etc., attached thereto. As the temperature of the gas detection section 1 is elevated by the heater 2 at the start of the engine 100 (e.g., elevated to about 700°C in about 5 seconds), the detection sensitivity of the gas detection section 1 composed of an oxide semiconductor is enhanced.

A transmission 315 is linked to the engine 100. Driving sprockets 317 are attached on an output axis 316 of the transmission 315. Via a chain 318, the driving sprockets 317 are linked to rear wheel sprockets 319 of the rear wheel 310.

FIG. 13 shows main component elements of a control system of the engine 100. On a cylinder 101 of the engine 100, an intake valve 110, an exhaust valve 106, and a spark plug 108 are provided. There is also provided a water temperature sensor 116 for measuring the water temperature of the cooling water with which to cool the engine. The intake valve 110 is connected to an intake manifold 122, which has an air intake. On the intake manifold 122, an airflow meter 112, a throttle valve 114, a throttle sensor 114a, and a fuel injector 111 are provided. Instead of the airflow meter 112, a vacuum sensor may be provided between the throttle valve 114 and the intake valve 110, and the intake amount may be measured.

The airflow meter 112, the throttle sensor 114a, the fuel injector 111, the water temperature sensor 116, the spark plug 108, and the oxygen sensor 10 are connected to an ECU (electrical control unit) 118. A vehicle velocity signal 120, which represents the velocity of the motorcycle 300, is also input to the ECU 118.

When a rider starts the engine 100 by using a self-starting motor (not shown), the ECU 118 calculates an optimum fuel amount based on detection signals obtained from the airflow meter 112, the throttle sensor 114a and the water temperature sensor 116, and the vehicle velocity signal 120. Based on the result of this calculation, the ECU outputs a control signal to the fuel injector 111. The fuel which is injected from the fuel injector 111 is mixed with the air which is supplied from the intake manifold 122, and injected into the cylinder 101 via the intake valve 110, which is opened or closed with appropriate timing. The fuel which is injected in the cylinder 101 combusts to become exhaust gas, which is led to the exhaust pipe 312 via the exhaust valve 106.

The oxygen sensor 10 detects the oxygen in the exhaust gas, and outputs a detection signal to the ECU 118. Based on the signal from the oxygen sensor 10, the ECU 118 determines the amount of deviation of the air-fuel ratio from an ideal air-fuel ratio. Then, the amount of fuel which is injected from the fuel injector 111 is controlled so as to attain the ideal air-fuel ratio relative to the air amount which is known from the signals obtained from the airflow meter 112 and the throttle sensor 114a. Thus, an air-fuel ratio controller which includes the oxygen sensor 10 and the ECU 118 connected to the oxygen sensor 10 appropriately controls the air-fuel ratio of the internal combustion engine.

Note that the ECU 118 may also function as the control section 3 of the oxygen sensor 10. That is, the constituent elements composing the control section 3 (e.g., a microcomputer implementing the controller 8) shown in FIG. 1 and other figures may be those which are mounted on the ECU 118.

In the motorcycle 300 incorporating the oxygen sensor 10 according to the present preferred embodiment, the sensor temperature can be accurately measured, and thus the sensor temperature can be suitably controlled to be in a desired range. Therefore, the oxygen sensor 10 has a long life, thus allowing fuel and air to be mixed at an appropriate air-fuel ratio for a long period of time, so that fuel can be combusted under optimum conditions. Since the sensor temperature can be controlled within a narrow range, even in the case where a gas detection section whose sensor characteristics have a large temperature dependence (e.g., the resistance-type gas detection section 1) is used, the influence which temperature fluctuations exert on the sensor characteristics can be reduced, and an accurate air-fuel ratio can be detected.

Although a motorcycle has been illustrated for instance, the present invention can also be suitably used for any other transportation apparatus, e.g., a four-wheeled automobile. Moreover, the internal combustion engine is not limited to a gasoline engine, but may alternatively be a diesel engine or other type of engine.

Furthermore, the present invention can be used for various types of gas sensors, without being limited to oxygen sensors. For example, the present invention can be suitably used for hydrogen sensors, $NO_x$ sensors, hydrocarbon sensors, organic compound sensors, and the like.

According to various preferred embodiments of the present invention, there is provided a gas sensor which is capable of compensating for variations in the electrical resistance value of a heater in an accurate and simple manner. The present invention is suitably used for various types of gas sensors. A gas sensor according to a preferred embodiment of the present invention is suitably used in an air-fuel ratio controller for various transportation apparatuses, e.g., a car, a bus, a truck, a motorbike, a tractor, an airplane, a motorboat, a vehicle for civil engineering use, or the like.

While the present invention has been described with respect to preferred embodiments thereof, it will be apparent to those skilled in the art that the disclosed invention may be modified in numerous ways and may assume many embodiments other than those specifically described above. Accordingly, it is intended by the appended claims to cover all modifications of the invention that fall within the true spirit and scope of the invention.

## Claims

**1.** A gas sensor comprising:

a gas detection section;
a heater having a resistance value that changes in accordance with temperature; and
a control section arranged to control an operation of an power supplied to the heater; wherein
the control section includes:

a current supply section arranged to supply a predetermined level of current to the heater in a period of time during which powering of the heater is stopped;
a voltage detection section arranged to detect an end-to-end voltage of the heater while a current is being supplied to the heater from the current supply section; and
a current adjustment section arranged to, during a cold period of the heater, adjust the predetermined level of the current which is supplied from the current supply section based on an ambient temperature and the end-to-end voltage of the heater detected by the voltage detection section.

**2.** The gas sensor of claim 1, wherein the current adjustment section adjusts the predetermined level of the current supplied from the current supply section so that the end-to-end voltage of the heater substantially equals a target voltage which is determined in accordance with the ambient temperature.

**3.** The gas sensor of claim 1 or 2, wherein the control section further includes an ambient temperature detection section arranged to detect the ambient temperature.

**4.** The gas sensor of any of claims 1 to 3, wherein the control section determines a temperature of the heater based on an end-to-end voltage of the heater which is detected while the level of current adjusted by the current adjustment section is being supplied to the heater, and adjusts a powering state of the heater so that the temperature of the heater has a value in a predetermined range.

**5.** The gas sensor of claim 4, wherein the control section determines the temperature of the heater by using a correction formula which includes a quadratic or higher-order temperature coefficient of resistance of the heater.

**6.** The gas sensor of claim 5, wherein the correction formula includes a correction factor used to realize a substantially equal distribution of positive and negative values of temperature errors.

**7.** The gas sensor of any of claims 1 to 6, wherein the gas detection section is arranged to detect oxygen.

**8.** An air-fuel ratio controller comprising the gas sensor of any of claims 1 to 7.

**9.** The air-fuel ratio controller of claim 8, further comprising an electrical control unit connected to the gas sensor, wherein,
the electrical control unit also functions as the control section of the gas sensor.

**10.** A transportation apparatus comprising:

an internal combustion engine; and
the air-fuel ratio controller of claim 8 or 9 arranged to control an air-fuel ratio of the internal combustion engine.

**11.** The transportation apparatus of claim 10, wherein the heater of the gas sensor is positioned so as to be exposed to an exhaust gas from the internal combustion engine.

**12.** The transportation apparatus of claim 10 or 11, wherein the current adjustment section executes a current adjustment when the internal combustion engine is started.

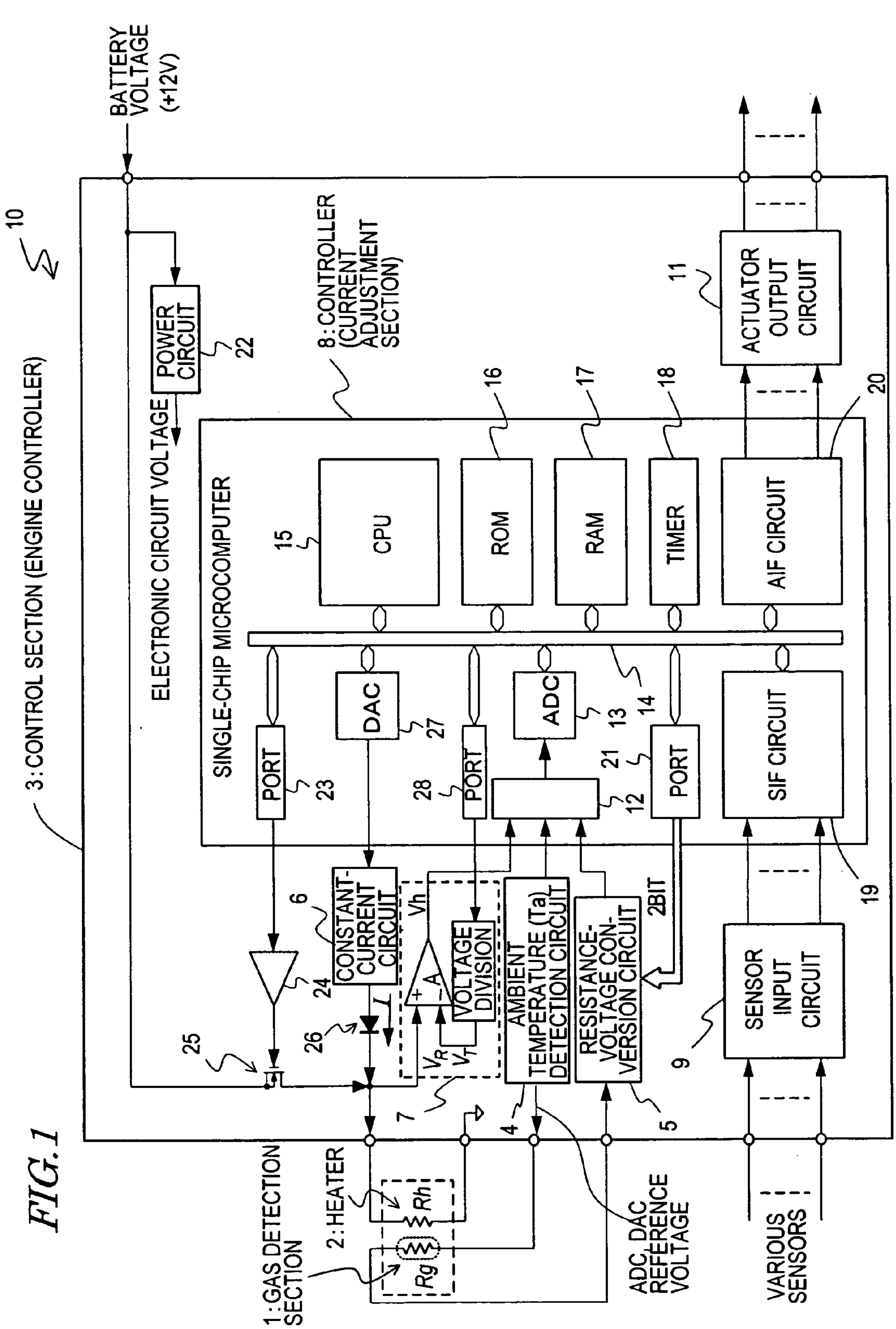
BATTERY VOLTAGE (+12V)
10
3: CONTROL SECTION (ENGINE CONTROLLER)
POWER CIRCUIT
22
ELECTRONIC CIRCUIT VOLTAGE
8: CONTROLLER (CURRENT ADJUSTMENT SECTION)
SINGLE-CHIP MICROCOMPUTER
15
CPU
16
ROM
17
RAM
18
TIMER
AIF CIRCUIT
20
11
ACTUATOR OUTPUT CIRCUIT
PORT
23
DAC
27
28
PORT
ADC
13
14
12
21
PORT
SIF CIRCUIT
19
6
CONSTANT-CURRENT CIRCUIT
Vh
A
VOLTAGE DIVISION
AMBIENT TEMPERATURE (Ta) DETECTION CIRCUIT
RESISTANCE-VOLTAGE CONVERSION CIRCUIT
2BIT
SENSOR INPUT CIRCUIT
9
24
25
26
I
$V_R$
$V_T$
7
4
5
1: GAS DETECTION SECTION
2: HEATER
Rh
Rg
ADC, DAC REFERENCE VOLTAGE
VARIOUS SENSORS
FIG.1

FIG.2

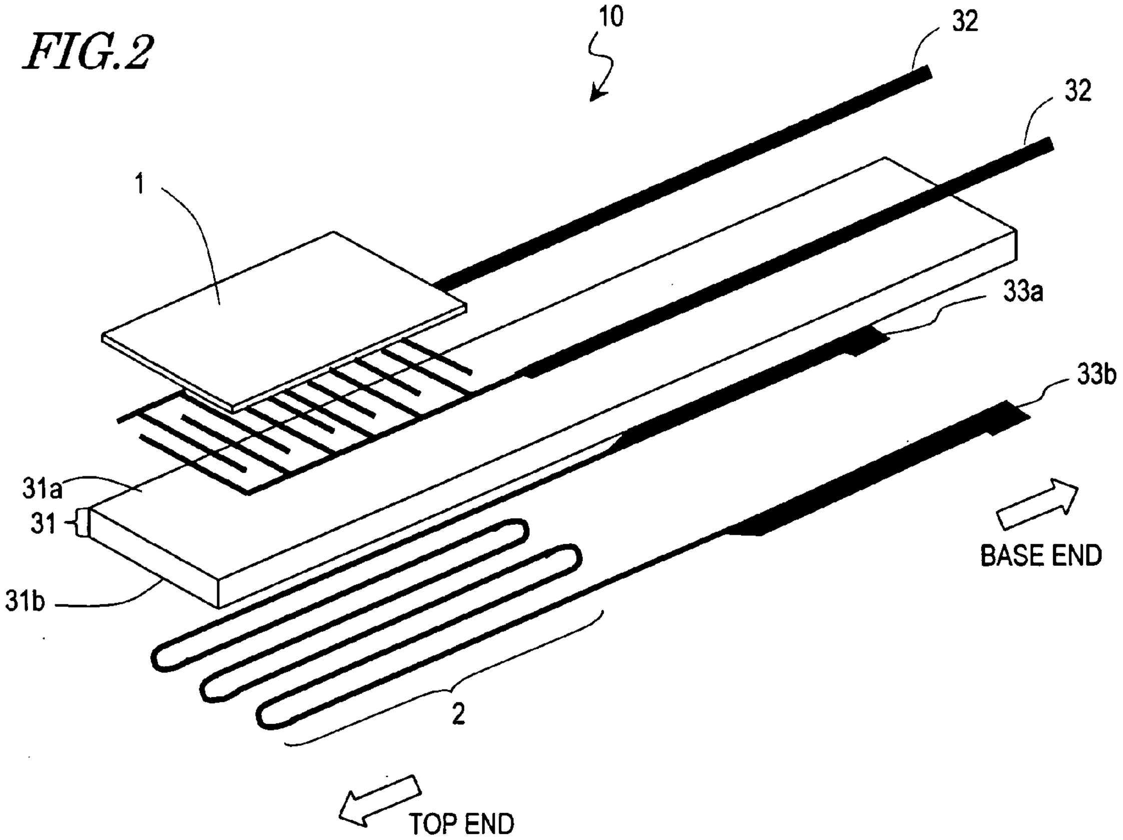

*FIG.3*

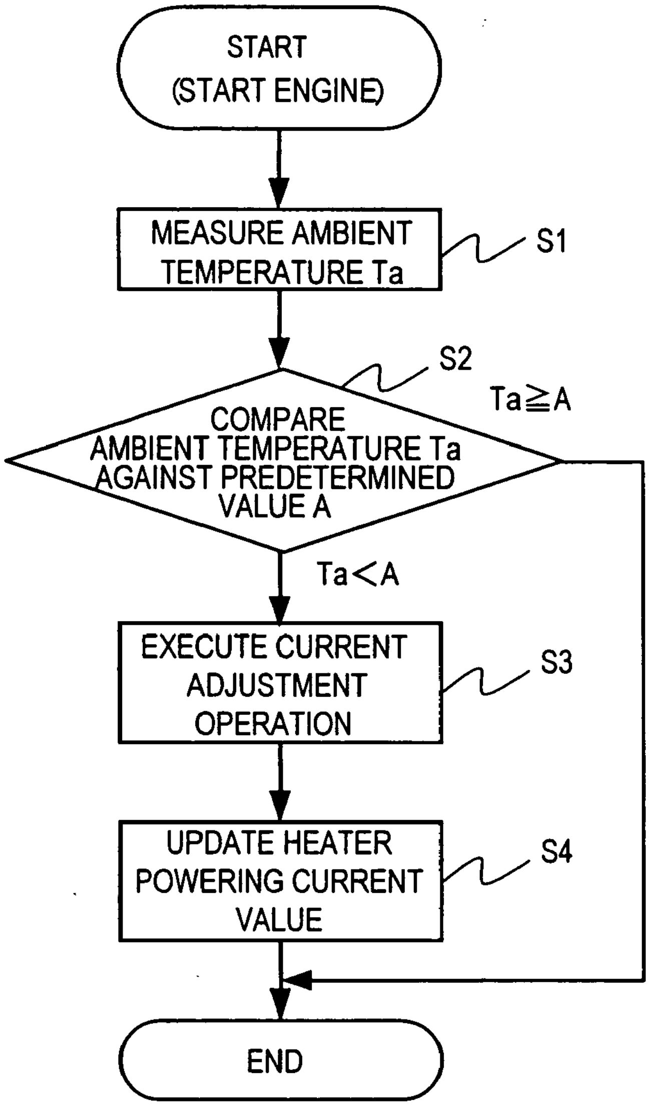
START
(START ENGINE)
MEASURE AMBIENT TEMPERATURE Ta
S1
S2
COMPARE AMBIENT TEMPERATURE Ta AGAINST PREDETERMINED VALUE A
Ta≧A
Ta<A
EXECUTE CURRENT ADJUSTMENT OPERATION
S3
UPDATE HEATER POWERING CURRENT VALUE
S4
END

FIG.4

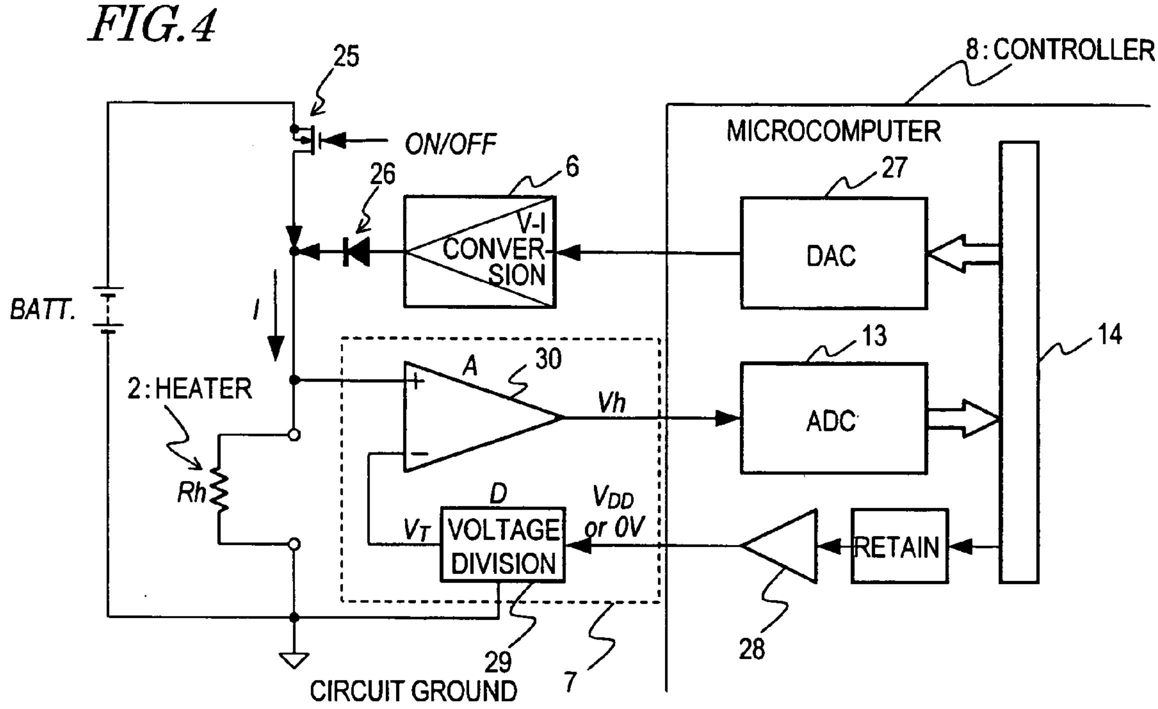
25
8: CONTROLLER
ON/OFF
MICROCOMPUTER
26
6
27
V-I
CONVER-
SION
DAC
BATT.
I
13
14
30
A
2: HEATER
Vh
ADC
Rh
D
$V_{DD}$
or 0V
$V_T$
VOLTAGE
DIVISION
RETAIN
29
28
CIRCUIT GROUND
7

FIG.5

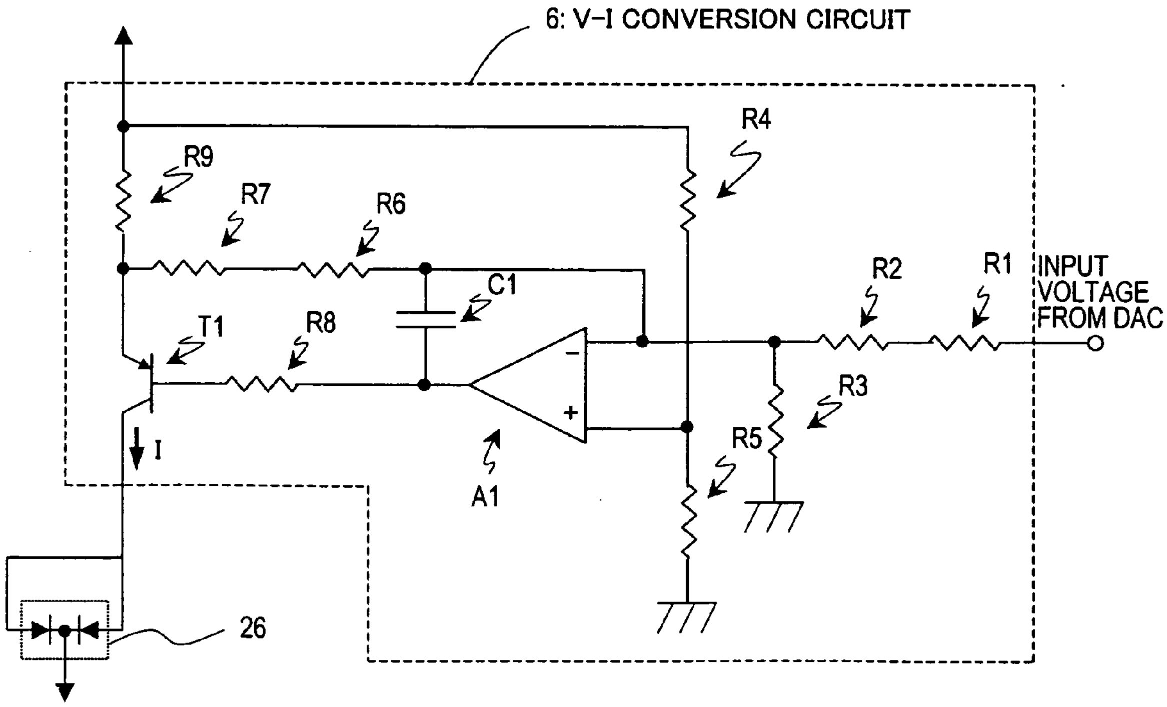
6: V-I CONVERSION CIRCUIT
R4
R9
R7
R6
R2
R1
INPUT
VOLTAGE
FROM DAC
C1
T1
R8
R3
I
R5
A1
26

*FIG.6*

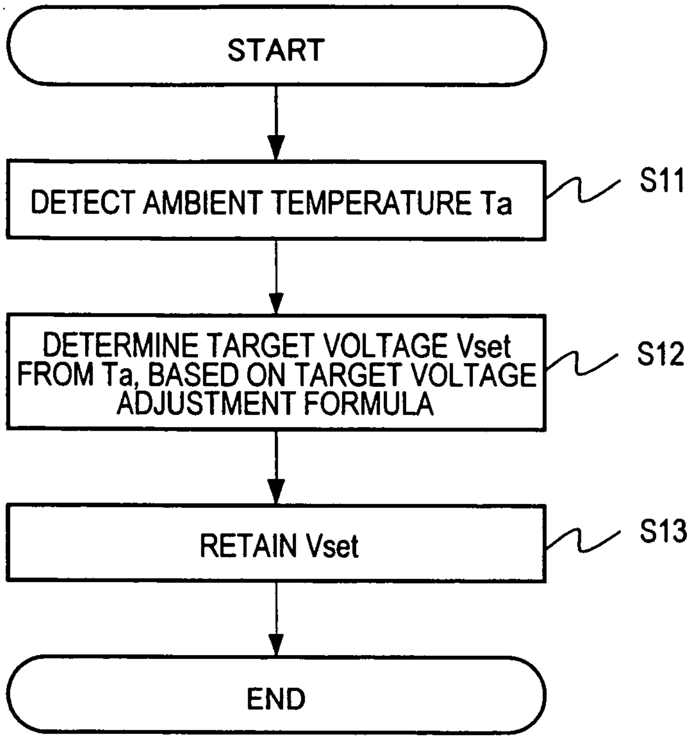
START
DETECT AMBIENT TEMPERATURE Ta
S11
DETERMINE TARGET VOLTAGE Vset FROM Ta, BASED ON TARGET VOLTAGE ADJUSTMENT FORMULA
S12
RETAIN Vset
S13
END

FIG. 7

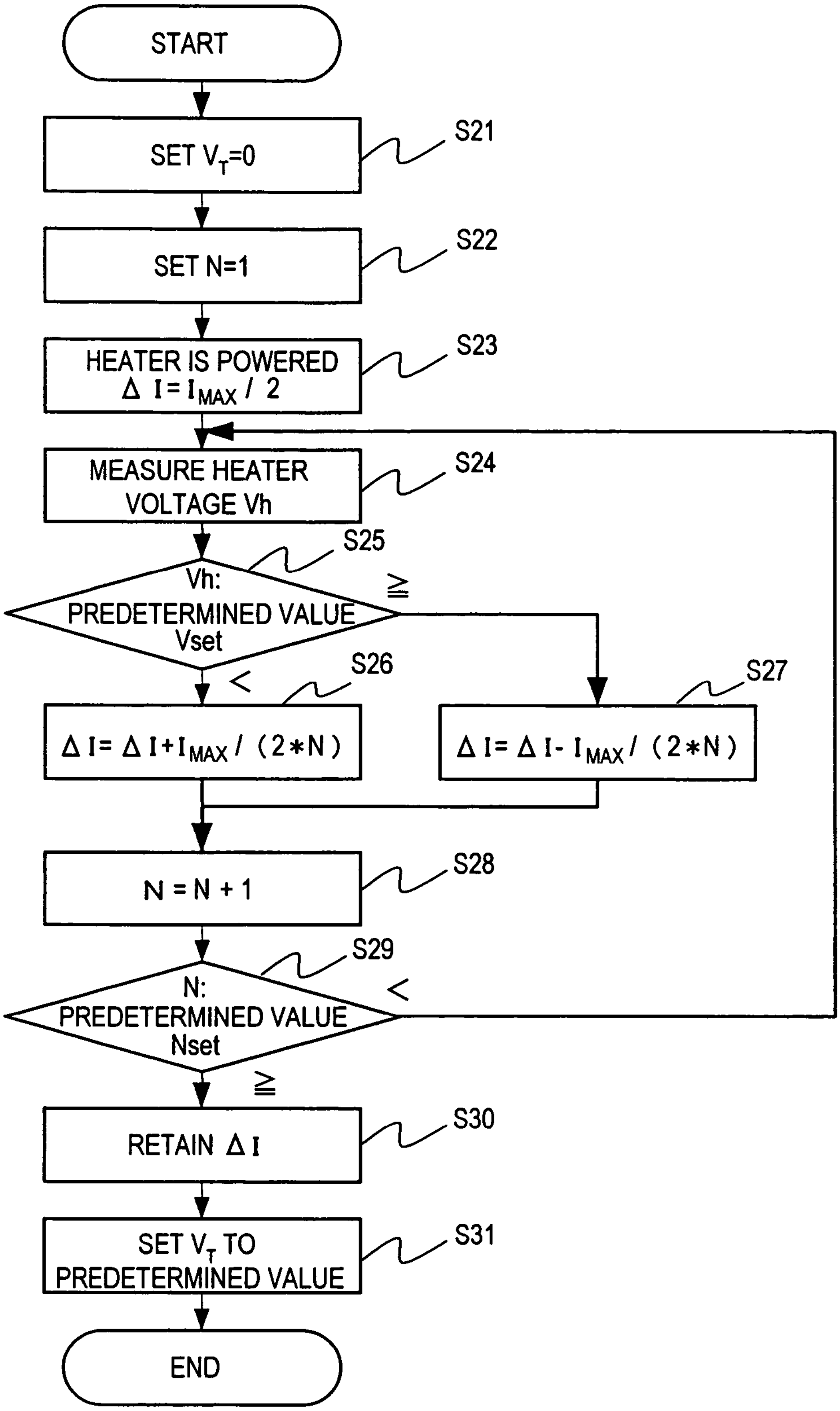
START
SET V_T=0
S21
SET N=1
S22
HEATER IS POWERED
Δ I = I_MAX / 2
S23
MEASURE HEATER
VOLTAGE Vh
S24
S25
Vh:
PREDETERMINED VALUE
Vset
≧
<
S26
S27
Δ I= Δ I+I_MAX / (2*N)
Δ I= Δ I- I_MAX / (2*N)
N = N + 1
S28
S29
N:
PREDETERMINED VALUE
Nset
<
≧
RETAIN Δ I
S30
SET V_T TO
PREDETERMINED VALUE
S31
END

FIG.8

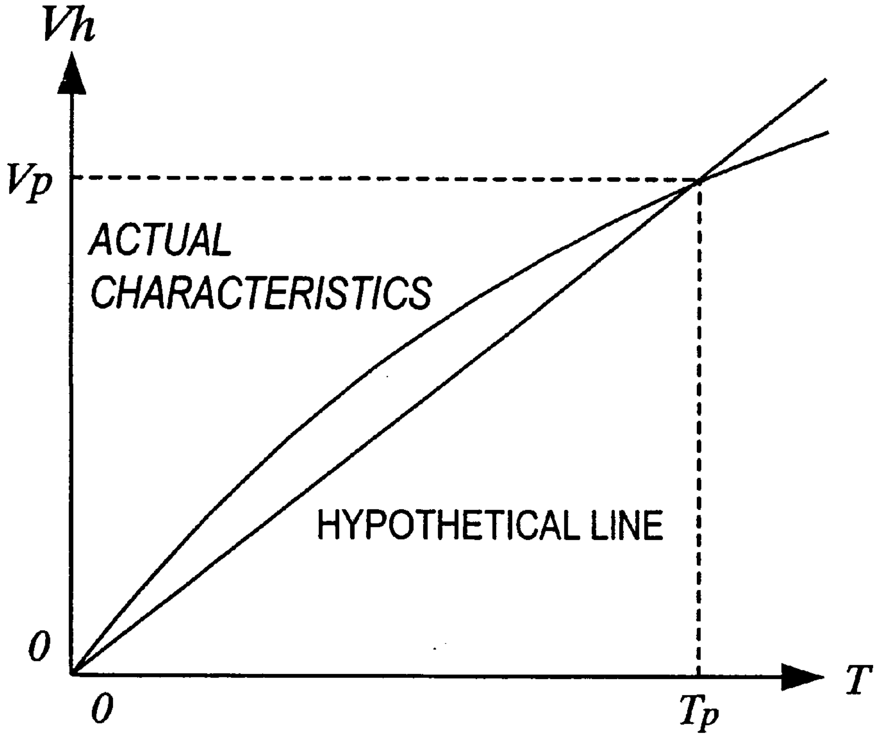
Vh
Vp
ACTUAL
CHARACTERISTICS
HYPOTHETICAL LINE
0
0
Tp
T

FIG.9

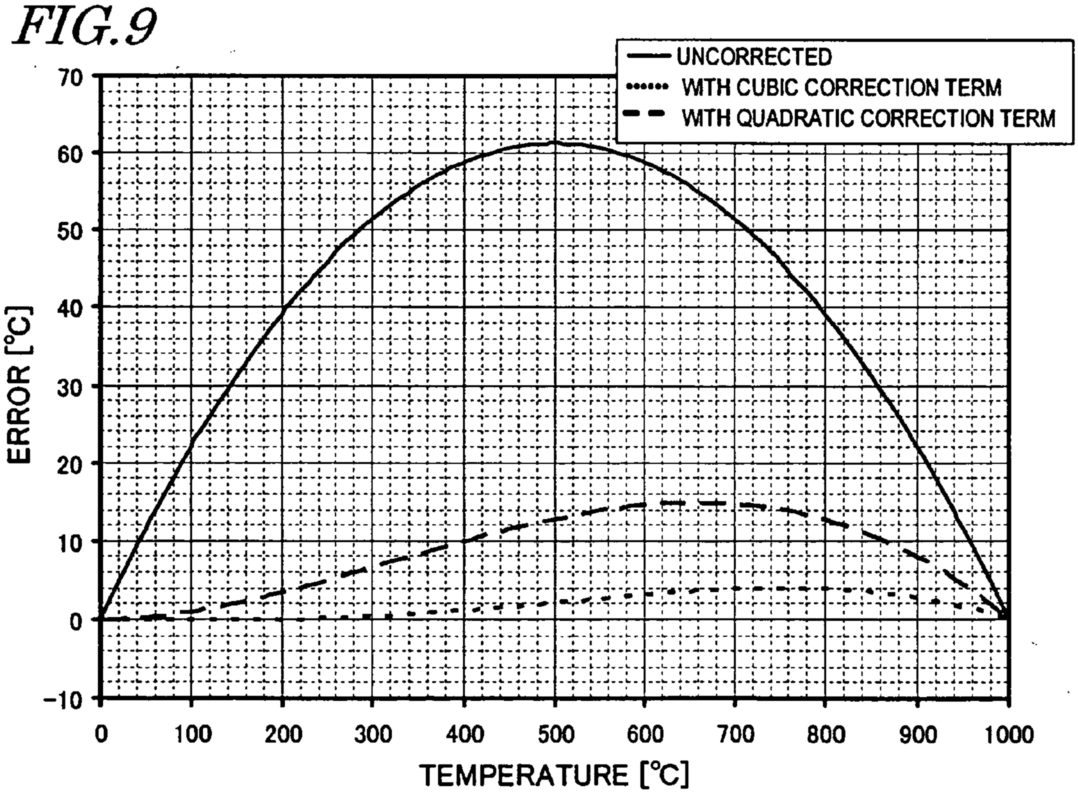
UNCORRECTED
WITH CUBIC CORRECTION TERM
WITH QUADRATIC CORRECTION TERM
70
60
50
40
30
20
10
0
-10
ERROR [℃]
0
100
200
300
400
500
600
700
800
900
1000
TEMPERATURE [℃]

*FIG.10*

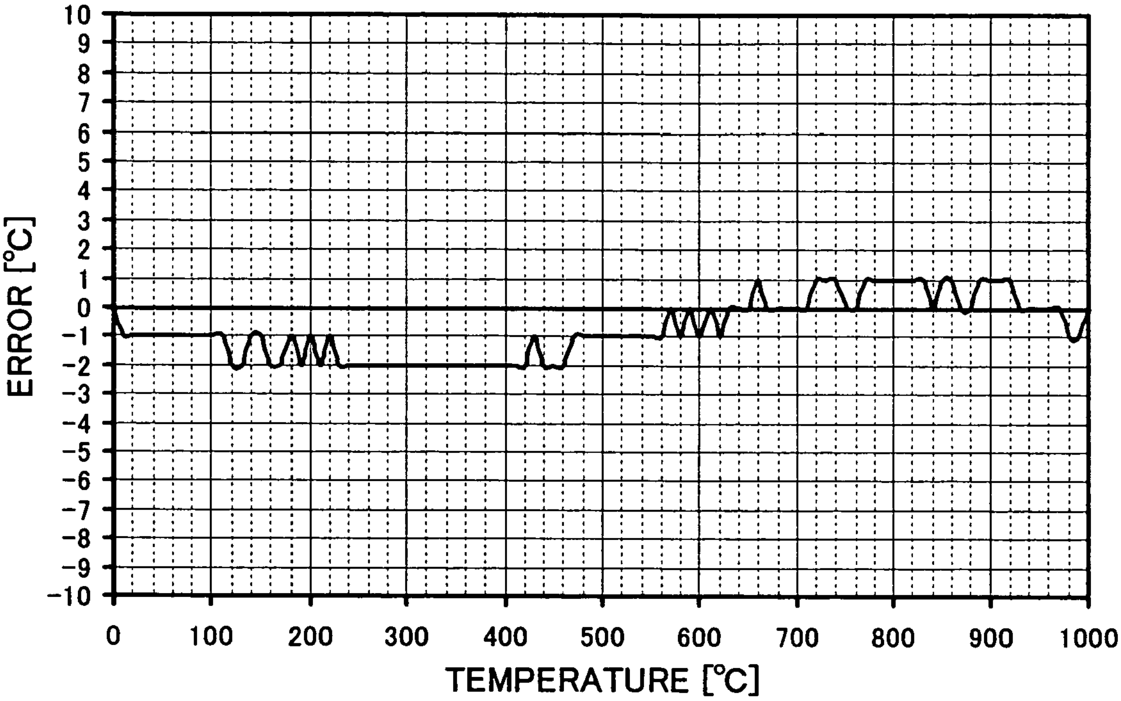
10
9
8
7
6
5
4
3
2
1
0
-1
-2
-3
-4
-5
-6
-7
-8
-9
-10
ERROR [°C]
0
100
200
300
400
500
600
700
800
900
1000
TEMPERATURE [°C]

*FIG.11*

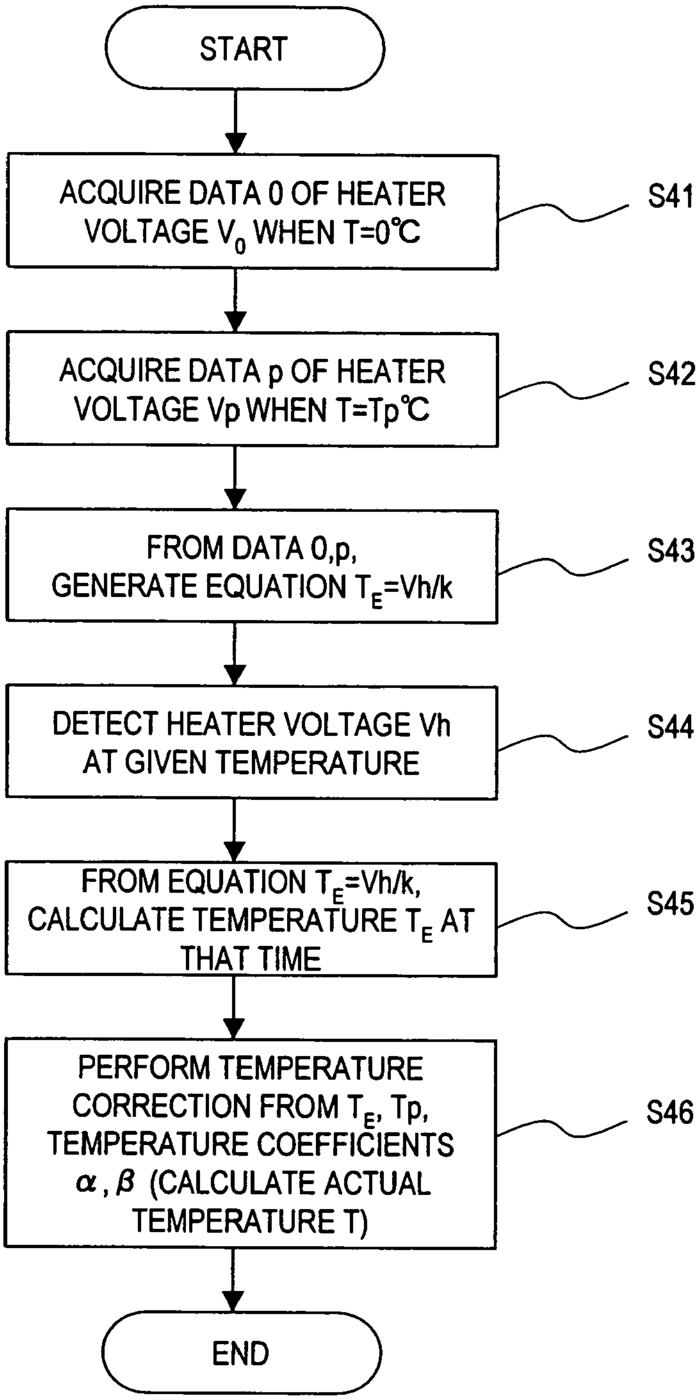
START
ACQUIRE DATA 0 OF HEATER VOLTAGE $V_0$ WHEN T=0℃
S41
ACQUIRE DATA p OF HEATER VOLTAGE Vp WHEN T=Tp℃
S42
FROM DATA 0,p, GENERATE EQUATION $T_E$=Vh/k
S43
DETECT HEATER VOLTAGE Vh AT GIVEN TEMPERATURE
S44
FROM EQUATION $T_E$=Vh/k, CALCULATE TEMPERATURE $T_E$ AT THAT TIME
S45
PERFORM TEMPERATURE CORRECTION FROM $T_E$, Tp, TEMPERATURE COEFFICIENTS $\alpha$, $\beta$ (CALCULATE ACTUAL TEMPERATURE T)
S46
END

*FIG.12*

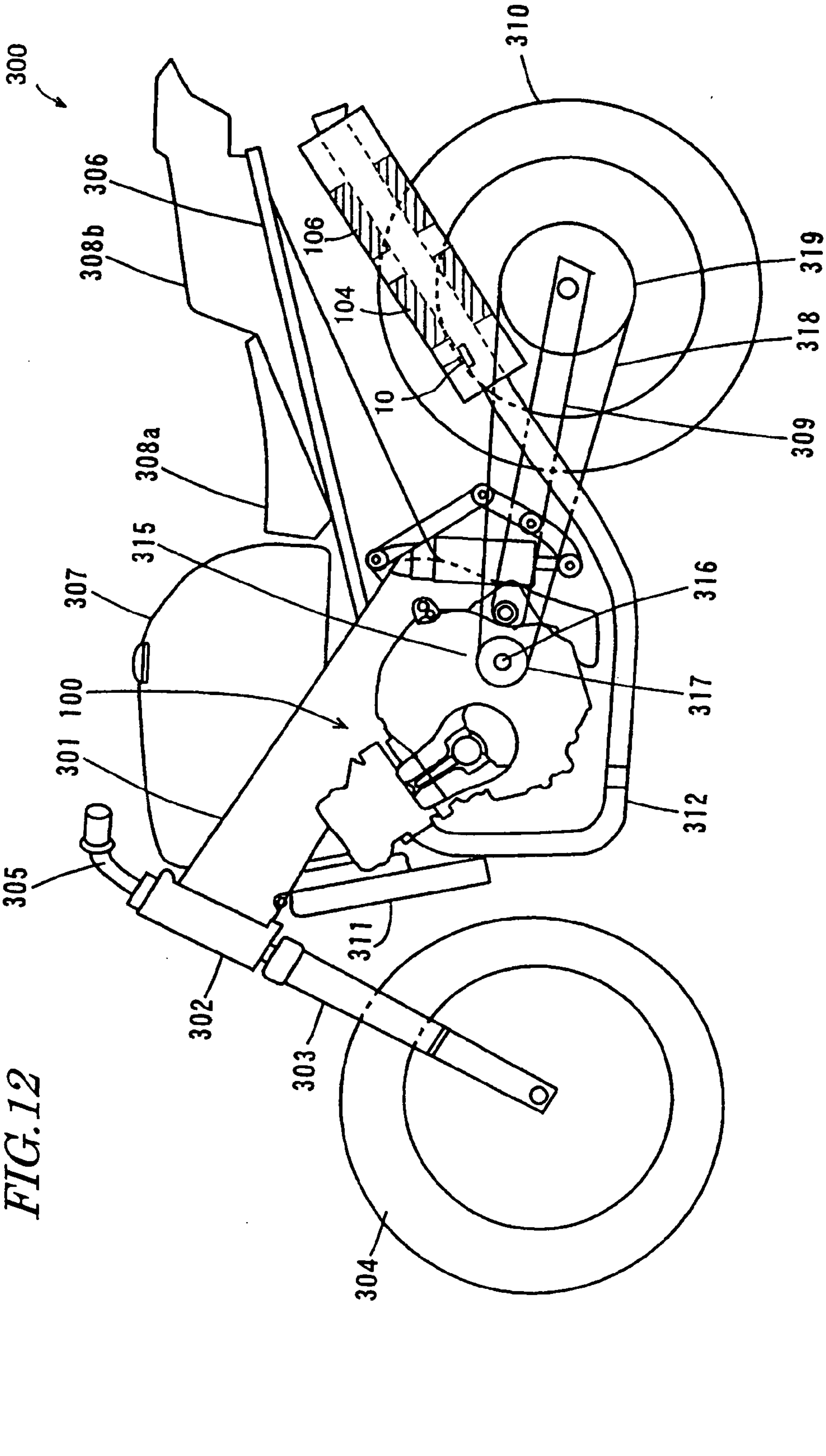

300
306
308b
310
106
104
10
319
318
309
308a
315
307
316
100
301
317
312
305
311
302
303
304

*FIG.13*

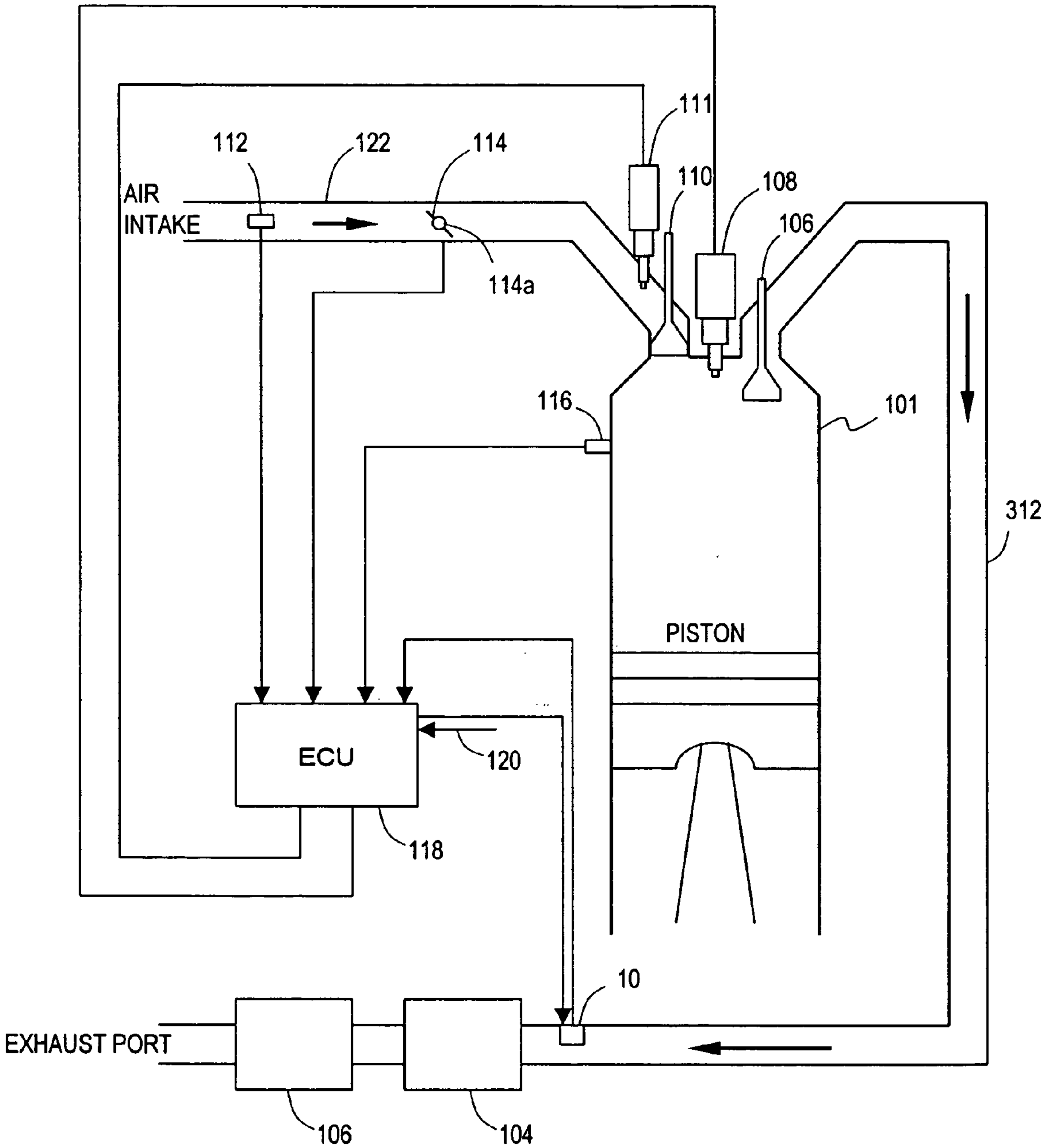
111
112
122
114
110
108
AIR
INTAKE
106
114a
116
101
312
PISTON
ECU
120
118
10
EXHAUST PORT
106
104

*FIG.14*

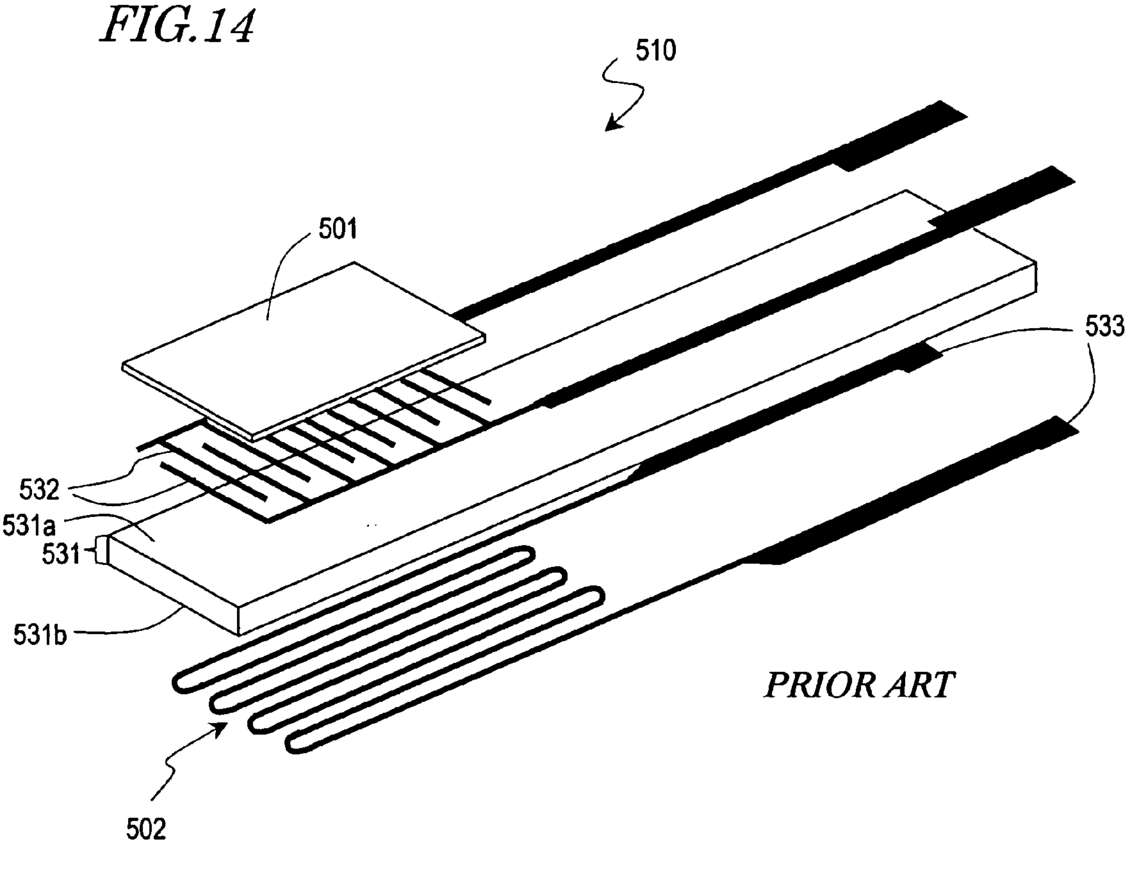


*PRIOR ART*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000180406 A
- JP 2000002678 A
- JP 8114571 A